# EUROPEAN PATENT APPLICATION

(11) **EP 2 226 712 A1**
(43) Date of publication of application: **08.09.2010**
(21) Application number: 08868206.7
(22) Date of filing: 24.12.2008
(51) Int. Cl.: G06F 3/048, B60R 11/02, G01C 21/00

(54) **INFORMATION TERMINAL DEVICE, INFORMATION PROCESSING METHOD, AND INFORMATION PROCESSING PROGRAM**

(30) Priority: 28.12.2007 JP 2007340529
(71) Applicant: Hitachi Ltd., Chiyoda-ku Tokyo 100-8280 (JP); Clarion Co., Ltd., Bunkyo-ku Tokyo 112-8608 (JP)
(72) Inventor: ISHII, Takaaki, Tokyo 107-6323 (JP); TAMAYAMA, Shotaro, Tokyo 107-6323 (JP); MATSUKUMA, Nobuhiko, Tokyo 107-6323 (JP); YOSHIMOTO, Masayoshi, Tokyo 107-6323 (JP); KOGA, Naoya, Tokyo 112-8608 (JP)
(74) Representative: Glawe, Delfs, Moll
(86) International application number: PCT/JP2008/003926
(87) International publication number: WO 2009/084185

(57) **Abstract**

An information terminal device having a user interface high operationality is provided.

The information terminal device has a display operation unit (LCD30, touch panel 31) that can display and input information , switching means (CPU 20a) for switching a plurality of operation modes provided to process different information, selecting means (CPU 20a) for successively selecting, in accordance with a user's operation, one display screen out of a reference screen as a display screen displayed at the beginning in each operation mode and one or plural display screens displayed successively in a predetermined order subsequently to the reference screen when the operation mode is switched by the switching means, and displaying the selected display screen on the display operation unit, and display means (drawing processor 20e) for displaying, on the display operation unit, an output state adjusting portion for adjusting an output stage of cognitive information on a display screen which is displayed at a predetermined number of order from the reference screen in each operation mode when a display screen is selected by the selecting means.

## Description

### Technical Field

The present invention relates to an information terminal device, an information processing method and an information processing program.

### Background Art

Many information terminal devices which can deal with various kinds of information have been recently distributed in the market.

In such an information terminal device, it is assumed that the operation thereof is complicated because plural kinds of data are dealt with. Therefore, there is disclosed a technique in which data management is performed so that audio data and video data have the same group structure, whereby the audio data and the video data can be operated with the same sense as shown in Patent Document 1.

Furthermore, Patent Document 2 discloses a technique in which when a cellular phone is connected, a communication menu and a sub window corresponding to an item selected from the communication menu are automatically displayed, whereby the time required for the operation can be shortened as compared with a case where a desired item is manually searched from the menu.
Patent Document 1: JP-A-2007-080426
Patent Document 2: JP-A-2001-159527

### Disclosure of the Invention

### Problem to be solved by the Invention

In the prior arts, when the output state of cognitive information such as sound, an image, etc. is adjusted, it is general that a setting screen for executing these settings is independently provided and an adjustment is executed on the setting screen. However, in such a method, it is necessary to call out the setting screen at all times when an adjustment is required, and thus there is a problem that the operation is cumbersome.

Therefore, the present invention has an object to provide an information terminal device equipped with a user interface having high operationality, an information processing method and an information processing program.

### Means of solving the Problem

In order to attain the above object, an information terminal device is characterized by comprising: a display operation unit that can display and input information; switching means for switching a plurality of operation modes provided to process different information; selecting means for successively selecting, in accordance with a user's operation, one display screen out of a reference screen as a display screen displayed at the beginning in each operation mode and one or plural display screens displayed successively in a predetermined order subsequently to the reference screen when the operation mode is switched by the switching means, and displaying the selected display screen on the display operation unit; and display means for displaying, on the display operation unit, an output state adjusting portion for adjusting an output stage of cognitive information on a display screen which is displayed at a predetermined number of order from the reference screen in each operation mode when a display screen is selected by the selecting means.
Therefore, in each operation mode, the output state adjusting portion for adjusting the output state of cognitive information is displayed on the screen of the predetermined order number from the reference screen, and thus it is unnecessary to call out a setting screen. As a result, an information terminal device having a user interface having high operationality can be provided.

In the above construction, the cognitive information is audio information, and when a display screen is selected by the selecting means, the display means displays the output state adjusting portion for adjusting the output state of the audio information on a part of the display operating unit on a display screen which is displayed next to the reference screen in each operation mode.
Therefore, the output state of the audio information can be executed in each operation mode. Accordingly, it is unnecessary to call out a setting screen, so that there can be provided an information terminal device having a user interface having high operationality.

Furthermore, in the above construction, the cognitive information is image information, and when a display screen is selected by the selecting means, the display means displays on a part of the display operating unit a slider for adjusting scale-enlarged display or scale-reduced display of plural information elements contained in an image information displayed on the display operating unit on a display screen which is displayed next to the reference screen in each operation mode.
Therefore, the output state of the image information can be executed in each operation mode. Accordingly, it is unnecessary to call out a setting screen, so that there can be provided an information terminal device having a user interface having high operationality.

In the above construction, the operation mode has an audio reproducing mode for reproducing audio data and a navigation mode for displaying map information to represent a route, the information element is an icon which represents audio data in the audio reproducing mode and a map in the navigation mode, and when the slider is operated, the icon or the map is displayed with being enlarged or reduced.
Therefore, by operating the slider, the icon or map as an information element can be displayed with being enlarged or reduced in scale.

Furthermore, in the above construction, the switching means switches the plural operation modes in accordance with an operation of a software button displayed on the display operation unit, and the display means successively selects and displays the display screen in accordance with an operation of a hardware button provided to a part of the information terminal device.
Therefore, the switching of the display screen which is frequently switched is performed by the hardware button, and the switching of the operation mode which is not frequently switched is performed by the software button. Therefore, the operationality can be enhanced, and the operation mode can be prevented from being switched by an erroneous operation.

Still furthermore, in the above construction, the information terminal device can be secured to a vehicle, the operation modes contain a car navigation mode, and the display means displays the output state adjusting portion at a position where the output state adjusting portion is not overlapped with an icon representing the position of the vehicle itself when the car navigation mode is selected by the switching means and the vehicle is running.
Therefore, when the car navigation mode is selected and the vehicle is running, the icon representing the position of the vehicle itself and the output state adjusting portion are prevented from being overlapped with each other, whereby the visibility of the information of the vehicle itself and its periphery on the map can be prevented from being lowered.

In the above construction, the information terminal device can be secured to a vehicle, the operation modes contain a car navigation mode, each of the operation modes has the ref erence screen, a display screen on which the output state adjusting portion is displayed and a sub menu for selecting a processing content in each operation mode, and the display means excludes from a display target a display screen on which the sub menu is displayed when the car navigation is selected by the switching means and the vehicle is running.
Therefore, when the car navigation mode is selected and the vehicle is running, the display screen on which the sub menu is displayed is excluded from the display target, whereby information which is not associated with the driving is excluded from the display target and thus the driving can be smoothly performed.

Furthermore, in the above construction, the information terminal device can be secured to a vehicle, the operation modes contain a car navigation mode, and the display means enlarges an operable area of the output state adjusting portion when the car navigation is selected by the switching means and the vehicle is running.
Therefore, when the car navigation mode is selected and the vehicle is running, the operable range is enlarged, and thus the output state adjusting portion can be easily performed during while driving the vehicle.

Still furthermore, in the above construction, the display means prohibits scroll operation of a map displayed on the display operation unit when the car navigation is selected by the switching means and the vehicle is running.
Therefore, when the car navigation mode is selected and the vehicle is running, the scroll operation of the map is prohibited, so that the operation on the output state adjusting portion can be prevented from being erroneously recognized as the operation on the map.

In the above construction, the information terminal device can be secured to a vehicle, the operation modes contain a car navigation mode, the output state adjusting portion can adjust a reproduction state of music data, and the display means does not display information concerning music data being reproduced on the output state adjusting portion, but displays the information in the other case.
Therefore, when the car navigation mode is selected and the vehicle is running, no music data is displayed on the output state adjusting portion, whereby the display area of the output state adjusting portion can be reduced and the visibility of the map can be prevented from being lowered.

Furthermore, according to the present invention, an information processing method for an information terminal deice is characterized by comprising: a switching step for switching a plurality of operation modes provided to process different information; a selecting step for successively selecting, in accordance with a user's operation, one display screen out of a reference screen as a display screen displayed at the beginning in each operation mode and one or plural display screens displayed successively in a predetermined order subsequently to the reference screen when the operation mode is switched in the switching step, and displaying the selected display screen on a display operation unit that can display and input information; and a display step for displaying, on the display operation unit, an output state adjusting portion for adjusting an output stage of cognitive information on a display screen which is displayed at a predetermined number of order from the reference screen in each operation mode when a display screen is selected in the selecting step.
Therefore, in each operation mode, the output state adjusting portion for adjusting the output state of the cognitive information is displayed on the screen at a predetermined number of order from the reference screen, and thus it is unnecessary to call out a setting screen. As a result, there can be provided an information processing program for an information processing device having a user interface of high operationality.

Furthermore, according to the present invention, an information processing program for an information terminal device is characterized in that the program makes the information terminal device function: switching means for switching a plurality of operation modes provided to process different information; selecting means for successively selecting, in accordance with a user's operation, one display screen out of a reference screen as a display screen displayed at the beginning in each operation mode and one or plural display screens displayed successively in a predetermined order subsequently to the reference screen when the operation mode is switched by the switching means, and displaying the selected display screen on a display operation unit that can display and input information; and display means for displaying, on the display operation unit, an output state adjusting portion for adjusting an output stage of cognitive information on a display screen which is displayed at a predetermined number of order from the reference screen in each operation mode when a display screen is selected by the selecting means.
Therefore, in each operation mode, the output state adjusting portion for adjusting the output state of the cognitive information is displayed on the screen at a predetermined number of order from the reference screen, and thus it is unnecessary to call out a setting screen. As a result, there can be provided an information processing program having a user interface of high operationality.
This control program may be recorded in various kinds of recording medium such as a magnetic recording medium such as a flexible disk, a hard disk device or the like, a magnetooptical recording medium such as MO or the like, an optical recording medium such as CD-R, CD-RW, DVD±R, DVD±RW, DVD-RAM or the like, a storage device using a semiconductor storage device or the like in a computer-readably style.

### Effect of the Invention

According to the present invention, there can be provided an information terminal device having high operationality, an information processing method and an information processing program.

### Brief Description of the Drawings

[Fig. 1] is a diagram showing the outlook of an information terminal device according to an embodiment.
[Fig. 2] is a block diagram showing an example of an electrical construction of the information terminal device;
[Fig. 3] is a diagram showing a hierarchical structure of a menu.
[Fig. 4] is a diagram showing a hierarchical structure of a display screen.
[Fig. 5] is a flowchart showing the flow of processing executed at the start time or when a "HOME" button is operated.
[Fig. 6] is a flowchart of a home menu screen.
[Fig. 7] is a flowchart showing the flow of the processing executed when a "FUNCTION" button is operated.
[Fig. 8] is a display example of a screen displayed when the "FUNCTION" button is operated on the screen of Fig. 6.
[Fig. 9] is a display example of a screen displayed when the "FUNCTION" button is operated on the screen of Fig. 8.
[Fig. 10] is a display example of a screen displayed when "TOOL" is selected on the screen of Fig. 9.
[Fig. 11] is a flowchart showing the flow of the processing executed when a "MAP" button is operated.
[Fig. 12] is a display example of a map screen.
[Fig. 13] is a display example of a screen displayed when the "FUNCTION" button is operated on the screen of Fig. 12.
[Fig. 14] is a display example of a screen displayed when the "FUNCTION" button is operated on the screen of Fig. 13.
[Fig. 15] is a display example of a screen displayed when "PARKING" is traced to the right on the screen of Fig. 14.
[Fig. 16] is a display example of a screen displayed when "RESTAURANT" is selected on the screen of Fig. 15.
[Fig. 17] is a display example of a music screen.
[Fig. 18] is a display example of a screen displayed when an icon is selected on the screen of Fig. 17.
[Fig. 19] is a display example of a screen displayed when "FUNCTION" button is operated on the screen of Fig. 18.
[Fig. 20] is a display example of a screen displayed when "FUNCTION" button is operated on the screen of Fig. 19.
[Fig. 21] is a display example of a screen displayed when "JAZZ" is selected on the screen shown in Fig. 20.
[Fig. 22] is a display example of a screen displayed when "POPS" is selected after "JAZZ" is traced on the screen shown in Fig. 21.
[Fig. 23] is a display example of a home page screen.
[Fig. 24] is a display example of a screen displayed when "FUNCTION" button is operated on the screen of Fig. 23.
[Fig. 25] is a display example of a screen displayed when "FUNCTION" button is operated on the screen of Fig. 24.
[Fig. 26] is a diagram showing an example of a hierarchical structure of a display screen when the information terminal device is mounted on a cradle and a vehicle is running.
[Fig. 27] is a diagram showing an example of a flowchart showing an operation when the information terminal device is mounted on the cradle.
[Fig. 28] shows an example of a screen displayed when the information terminal device is mounted on a cradle and the vehicle is running.
[Fig. 29] is a diagram showing an operable range of a volume adjusting area shown in Fig. 28.
[Fig. 30] shows an example of a screen displayed when the information terminal device is mounted on the cradle and the vehicle is running.

### Description of Reference Numerals

- 10: information terminal device
- 20a: CPU (switching means, selecting means)
- 20b: ROM
- 20c: RAM
- 20d: HDD
- 20e: drawing processor
- 20f: I/F
- 20g: bus

- 30: LCD (part of display operation unit, display means)
- 31: touch panel
- 32: GPS receiver
- 33: input unit
- 34: reproducing unit
- 35: connection terminal
- 36: cradle

### Best Modes for carrying out the Invention

### (A) Description of Construction of Embodiments

n embodiment according to the present invention will be described with reference to the drawings.

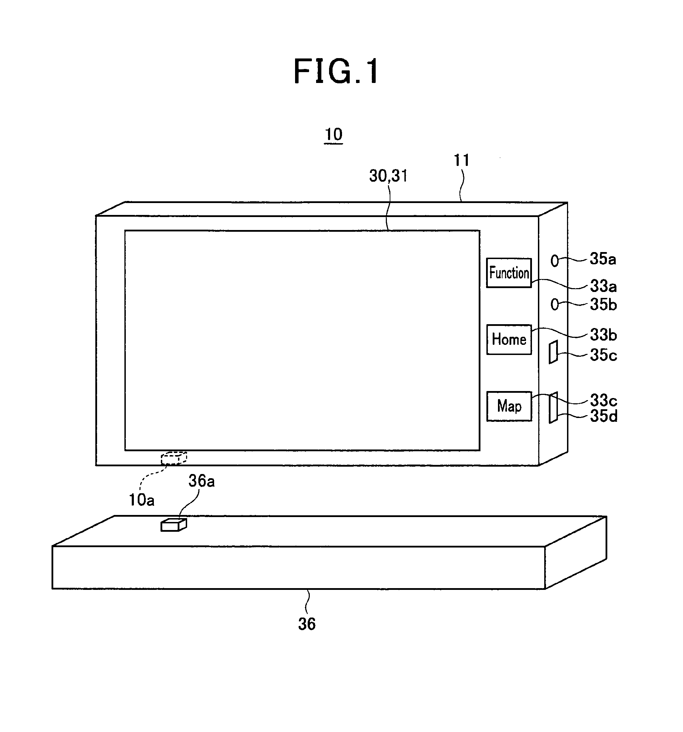

Fig. 1 is a diagram showing the outlook of an example of the construction of an information terminal device according to an embodiment of the present invention. As shown in Fig. 1, the information terminal device 10 according to the embodiment of the present invention has a housing 11 having a substantially rectangular parallelepiped shape, and LCD (Liquid Crystal Display) 30 and a touch panel 31 described later are arranged on the surface of the housing 11 (a surface at the front side in the backward direction of Fig. 1) so as to be stacked on each other. Furthermore, hardware buttons 33a to 33c are provided at the right side of LCD and the touch panel 31 (the right side of Fig. 1). Furthermore, various kinds of connection terminals 35a to 35d are provided on the right side surface of the housing 11 (the side surface of the right side of Fig. 1). Here, LCD 30 displays a video signal supplied from a drawing processor 20e described later. When a predetermined site is indicated by a user's hand or a pen type input member, the touch panel 31 generates and outputs information representing the coordinate of the site concerned. The touch panel 31 is disposed so as to be superimposed on the display unit of LCD 30. The touch panel 31 is formed of a transparent member, and thus a user can operate the touch panel 31 to input information while referring to the information displayed on LCD 30.

The cradle 36 is used as an adaptor when the information terminal device 10 is mounted in a vehicle, and for example it is disposed in a dashboard of the vehicle. A connection terminal 36a is provided to a part of the top surface (the upper surface of Fig. 1) of the cradle 36. When the information terminal device 10 is mounted on the top surface of the cradle 36, the connection terminal 36a is fitted to the connection terminal 10a provided to the bottom surface of the information processing terminal 10, whereby the information terminal device 10 and the cradle 36 are connected to each other. A vehicle-speed pulse signal line and a power source of the vehicle are connected to the connection terminal 36a, and a vehicle-speed pulse signal and power of the power source are supplied to the information processing terminal 10 through the connection terminal 10a.

As described later, a hardware button 33a is operated when a hierarchy of the screen displayed on LCD 30 is changed. The hardware button 3b is operated when the screen is moved to a home menu screen described later. Furthermore, the hardware button 33c is operated when the screen is moved to a map screen described later. A headphone or an earphone is connected to the connection terminal 35a, and an audio signal is output to the headphone or the earphone. A power source cable for supplying power is connected to the connection terminal 35b, and DC power is supplied from an AC (Alternate Current) adaptor (not shown) to the connection terminal 35b. An IEEE (Institute of Electrical and Electronics Engineers) 1394 cable is connected to the connection terminal 35c to receive/transmit a video signal or the like from/to a personal computer, a video camera or the like, for example. An USB (Universal Serial Bus) cable is connected to the connection terminal 35d to receive/transmit information such as images , sounds, pictures, etc. from/to a personal computer, a digital camera or the like, for example.

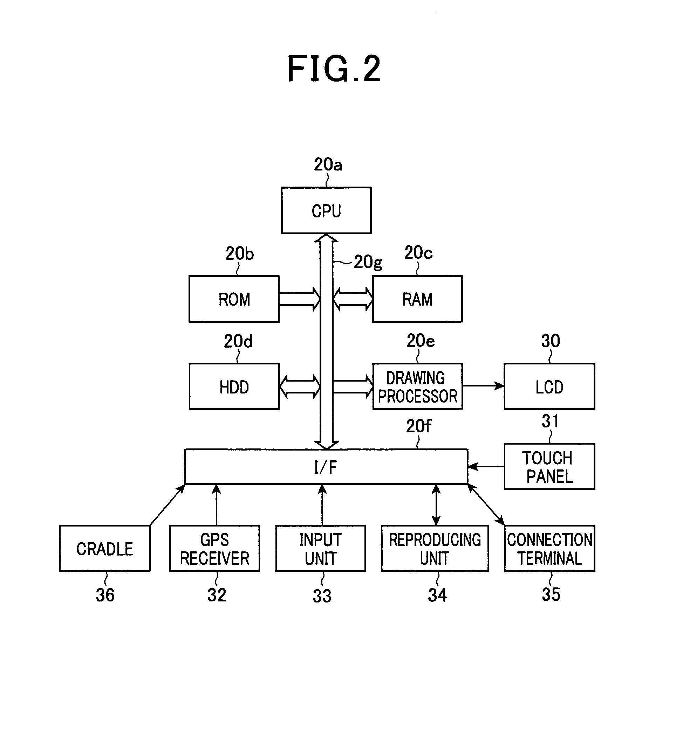

Fig. 2 is a block diagram showing an example of the electrical construction of the information terminal device 10. As shown in Fig. 2, the information terminal device 10 has CP (Central Processing Unit) 20a, ROM (Read Only Memory) 20b, RAM (Random Access Memory) 20c, HDD (Hard Disk Drive) 20d, a drawing processor 20e, I/F (Interface) 20f, a bus 20g, LCD 30, a touch panel 31, GPS (Global Positioning System) receiver 32, an input unit 33, a reproducing unit 34, a connection terminal 35, and a cradle 36. Here, CPU 20a controls the respective parts of the device and executes various kinds of calculation processing on the basis of programs stored in ROM 20b and HDD 20d. ROM 20b stores programs to be executed by CPU 20a and data. RAM 20c functions as a work area corresponding to a temporary storing area when CPU 20a executes a program. HDD 20d is a device for writing information into a hard disc as a magnetic recording medium, and reading out written information. The drawing processor 20e executes drawing processing on the basis of a drawing command supplied from CPU 20a, converts an obtained image to a video signal, supplies the video signal to LCD 30 to display the video signal. I/F 20f receives information from the GPS receiver 32, the input unit 33 , the touch panel 31 and the cradle 35, and also receives/transmits information from/to the reproducing unit 34 and the connection terminal 35. The bus 20g is a signal line group through which CPU 20a, ROM 20b, RAM 20c, HDD 20d, the drawing processor 20e and the I/F 20f are mutually connected to one another to enable communications of information among these units.

LCD 30 displays a video signal supplied from the drawing processor 20a. The touch panel 31 is disposed so as to be superimposed on LCD 30 as described above, and generates and outputs position information corresponding to a user' s operation. The GPS receiver 32 receives signals from plural GPS satellites (not shown), and generates and outputs locating position information of the GPS receiver 32 itself (latitude and longitude information) on the basis of these signals according to a trigonometric method. The input unit 33 comprises hardware buttons 33a to 33b and switches (not shown) which are set to ON or OFF in accordance with the operation of these hardware buttons 33a to 33b, and generates and outputs information corresponding to the operation of the hardware buttons 33a to 33b. The reproducing unit 34 decodes a bit stream supplied from CPU 20a on the basis of the MP3 system or the MPEG system, for example, and outputs obtained video data or audio data. Connection terminals 35 contain the connection terminals 35a to 35c described above, and when a connection cable is connected, various kinds of signals or information can be received/transmitted through the connection cable. As described above, the cradle 36 is disposed on the dashboard of the vehicle, and the information terminal device 10 is mounted on the top surface of the cradle 36 concerned. When the information terminal device 10 is mounted on the cradle 36, CPU 20a detects it through I/F 20f, obtains power supply power from a battery of the vehicle, and also receives an input of a vehicle-speed pulse signal. Furthermore, as described later, CPU 20a changes the operation mode in accordance with whether the information terminal device 10 is connected to the cradle 36 or not.

### (B) Description of Operation of Embodiment

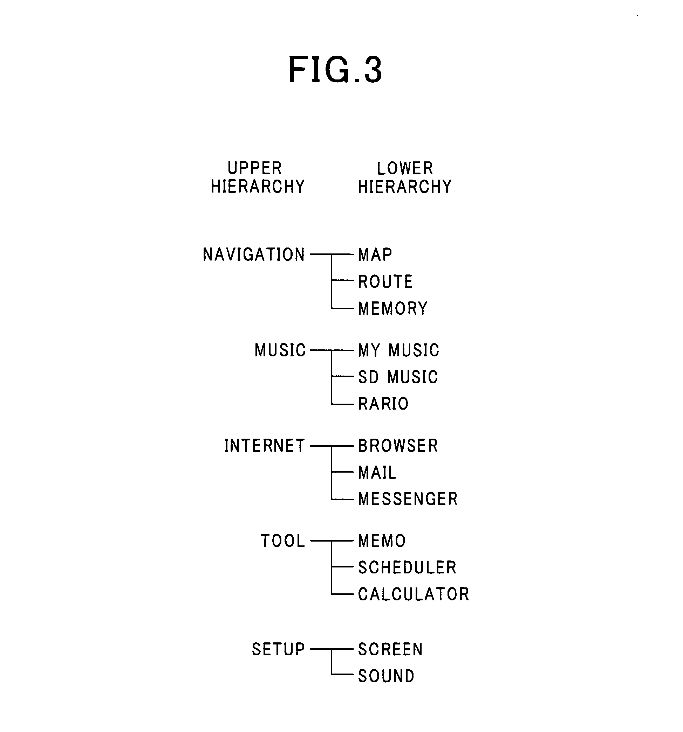

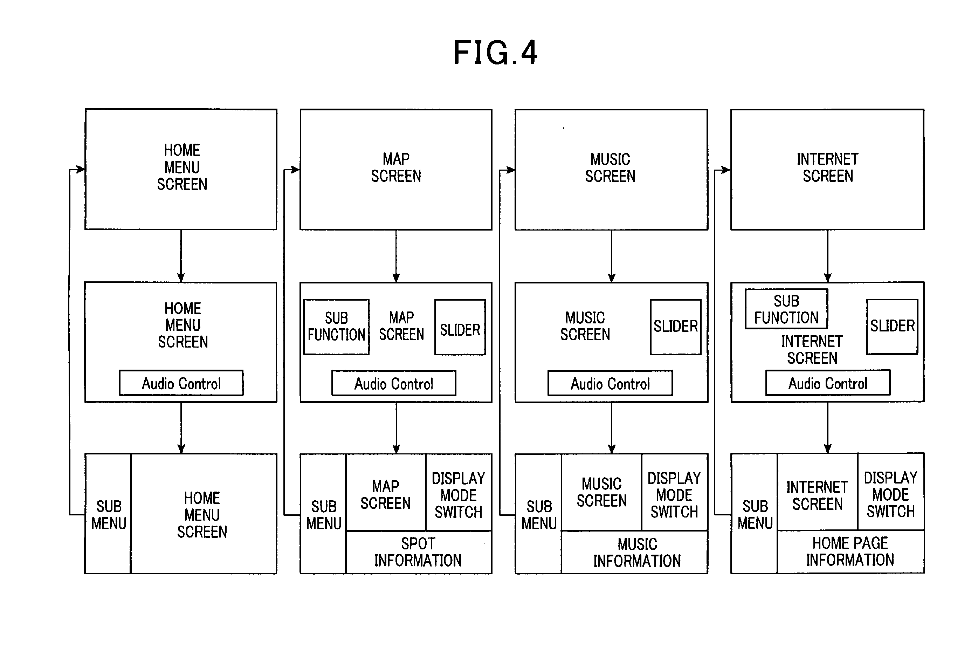

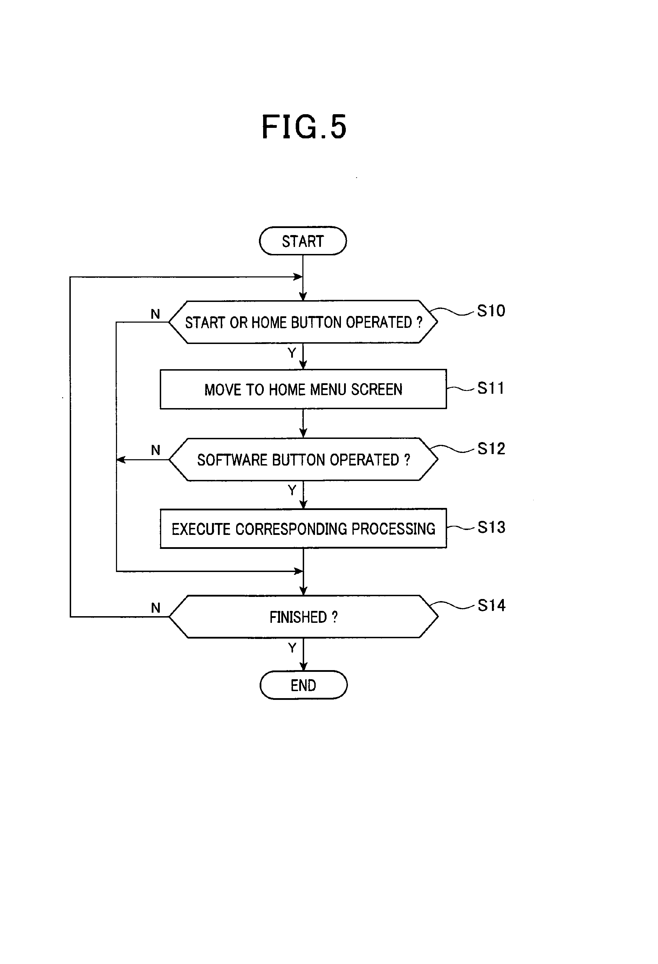

ext, the operation of an embodiment of the present invention will be described. In the following description, the hierarchical structure of a menu and a screen of the information terminal device 10 will be described with reference to Figs. 3 and 4 , and then the detailed operation of the information terminal device 1 will be described with reference to Figs. 5 to 30.

Fig. 3 is a diagram showing the hierarchical structure of the menu of the information terminal device 10. As shown in Fig. 3, the menu of the information terminal device 10 has an upper hierarchy shown at the left side of Fig. 3 and a lower hierarchy shown at the right side of Fig. 3. In this example of Fig. 3, "NAVIGATION" , "MUSIC", "INTERNET", "TOOL" and "SETUP" exist in the upper hierarchy. Here, the "NAVIGATION" belonging to the upper hierarchy is a menu item for making LCD 30 display a map thereon, and also selected when information processing concerning a map such as a route guide, etc. is executed. "MAP", "ROUTE" and "MEMORY" exist in the lower hierarchy of "NAVIGATION". "MAP" is a menu item selected when map information is displayed on LCD 30. "ROUTE" is a menu item selected when map information is displayed on LCD 30 and route search is executed. "MEMORY" is a menu item selected when information is displayed or route search is executed on the basis of records, etc. stored in HDD 20d.

"MUSIC" belonging to the upper hierarchy is a menu item selected when processing concerning music is executed. "MY MUSIC", "SD MUSIC" and "RADIO" exist in the lower hierarchy of "MUSIC". "MY MUSIC" is a menu item selected when music data stored in HDD 20d are reproduced. "SD MUSIC" is a menu item selected when an SD (Secure Digital) memory card is connected to I/F 20f, for example, and music data stored in the SD memory card is reproduced. "RADIO" is a menu item selected when radio broadcast is received by a tuner unit (not shown) and reproduced.

"INTERNET" belonging to the upper hierarchy is a menu item selected when processing concerning the Internet is executed. "BROWSER", "MAIL" and "MESSENGER" exist in the lower hierarchy of the "INTERNET". "BROWSER" is a menu item selected when contents stored in a WEB server on the Internet browsed. "MAIL" is a menu item selected when an electronic mail is transmitted/received or created. "MESSENGER" is a menu item selected when information is received/transmitted between users connected to the Internet by using text information.

"TOOL" belonging to the upper hierarchy is a menu item selected when a note is taken or a schedule is input. "MEMO", "SCHEDULER" and "CALCULATOR" exist in the lower hierarchy of "TOOL". "MEMO" is a menu item selected when a note is taken. "SCHEDULER" is a menu item selected when a schedule is edited and managed. "CALCULATOR" is a menu item selected when an electric calculator is displayed to make a calculation.

Furthermore, "SETUP" belonging to the upper hierarchy is a menu item selected when various kinds of settings are executed. "SCREEN" and "SOUND" exist in the lower hierarchy of "SETUP". "SCREEN" is a menu item selected when brightness, contrast , etc. of LCD 30 are set. "SOUND" is a menu item selected when the reproducing unit 34 is set.

Fig. 4 is a diagram showing an example of the hierarchical structure of screens displayed on LCD 30. In this diagram, it is indicated that the hierarchy of a screen is higher as the screen is located at an upper side of Fig. 4. Conversely, the hierarchy of a screen is lower as the screen is located at a lower side. With respect to the respective screens, the movement between the hierarchies can be performed by operating the hardware button 33a shown in Fig. 1. That is, the hierarchy is moved to the lower hierarchy every time the hardware button 33a is operated, and when the hierarchy reaches the lower layer of the lowermost hierarchy, the hierarchy is cyclically moved to the uppermost hierarchy.

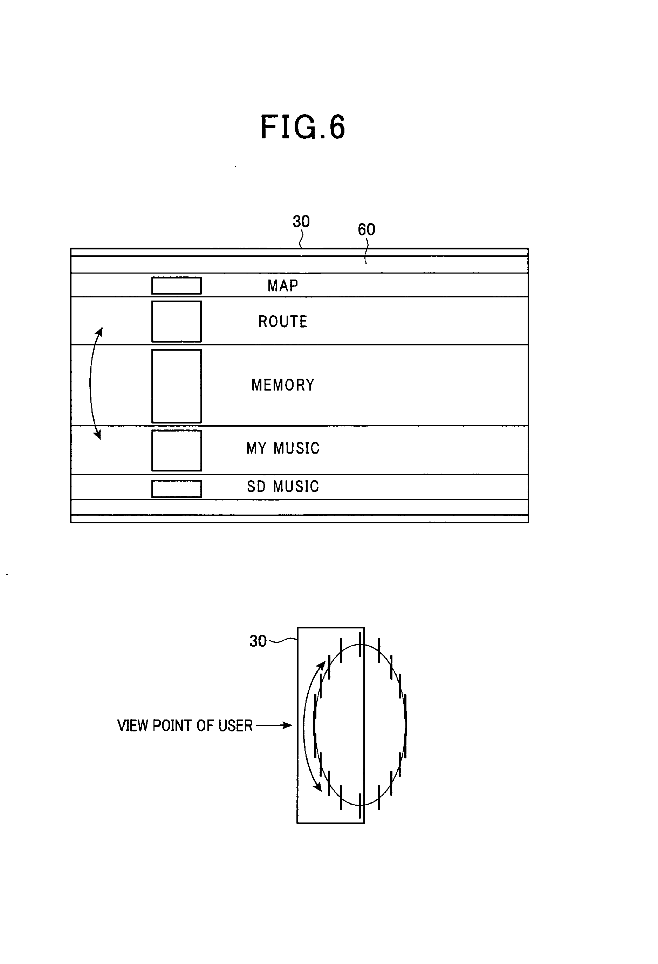

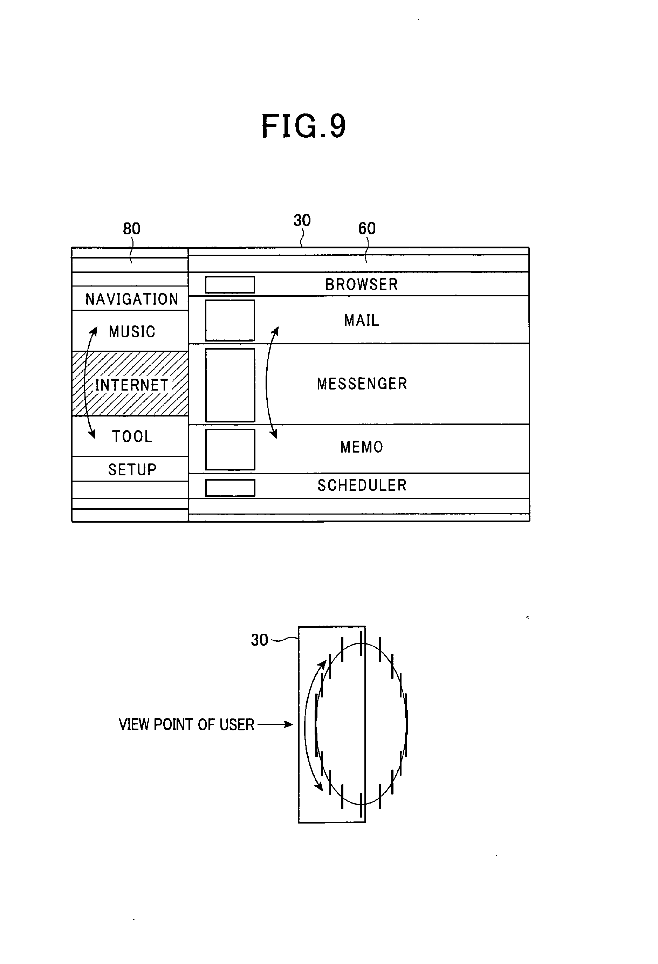

The home menu screen at the uppermost stage at the left end of Fig. 4 is a screen which is first displayed when the information terminal device 10 is powered on. By operating a software button (described in detail layer) displayed on the home menu screen, the screen can be moved to "map screen", "music screen" and "internet screen" displayed at the uppermost portion of Fig. 4. "home menu screen", "map screen", "music screen" and "Internet screen" are reference screens of respective operation modes ("map mode", "music mode" and "Internet mode", and various kinds of information ( "menu information (test information, image information, etc.)", "map information (test information, image information, etc.)", "music information (test information, image information, sound information, etc. ) " and "Internet information (test information, image information, sound information, etc.)" are processed in the respective operation modes. As described later with reference to Fig. 6, on the home menu screen, the screen can be moved to the map screen, the music screen, the Internet screen or the like by selecting a desired menu item from the plural menu items. Furthermore, When the hardware button 33a shown n Fig. 1 is operated under the state that the home menu screen is displayed, the screen is moved to the screen of the lower hierarchy (the second screen from the upper side of the left end of Fig. 4), and "Audio Control" as an audio controller for controlling music data reproduced by the reproducing unit 34 is displayed. When the hardware button 33a is operated on the screen as described above, the screen is moved to the screen of the lower hierarchy described later with reference to Fig. 9 (the third screen from the upper side of the left end of Fig. 4), and a sub menu is displayed. In the sub menu, a prescribed item is displayed at the head or the like from items displayed on the main menu.

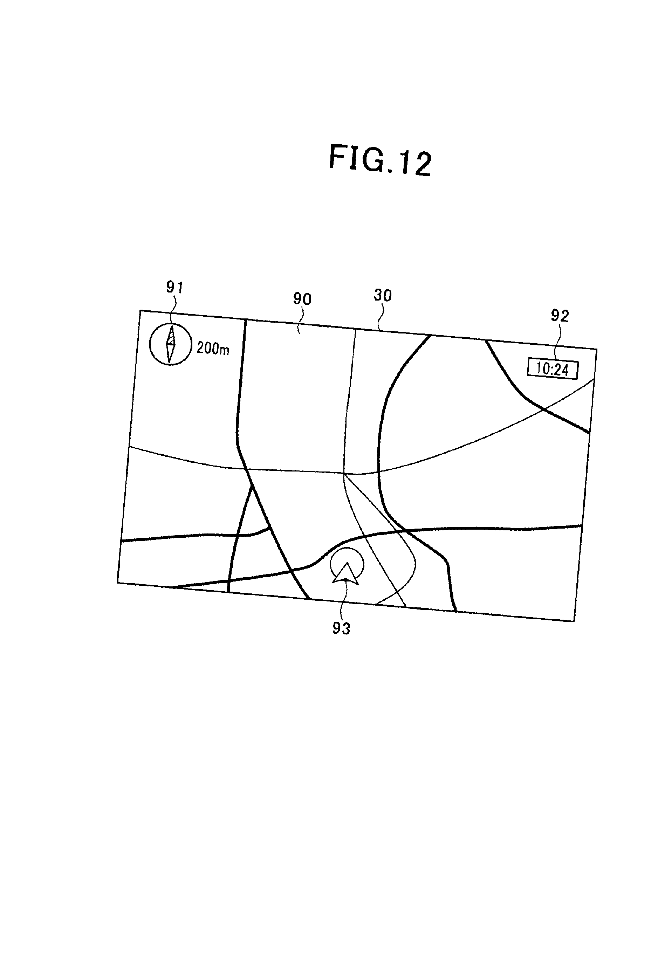

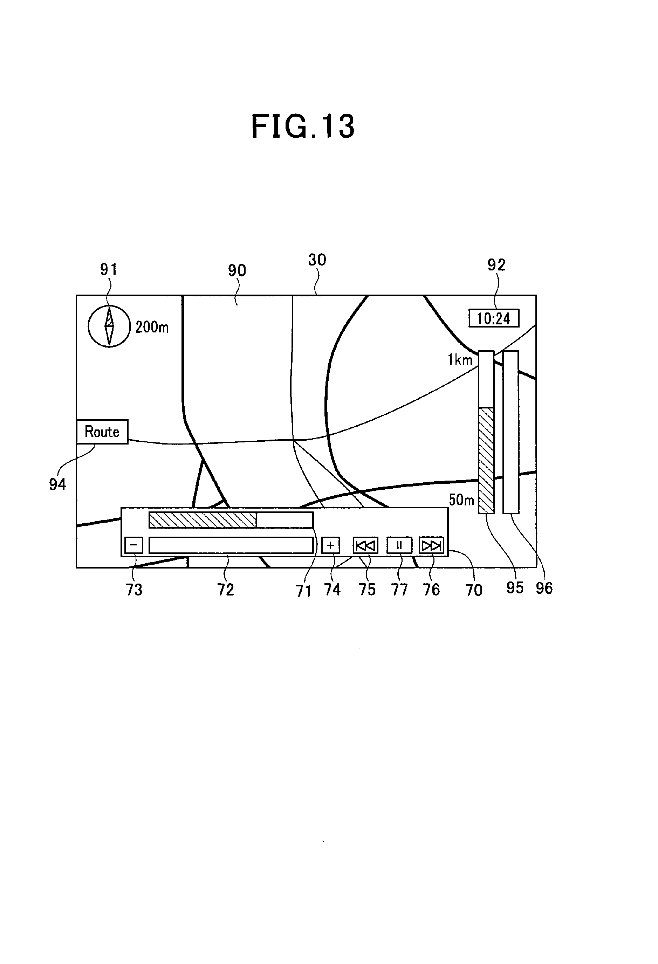

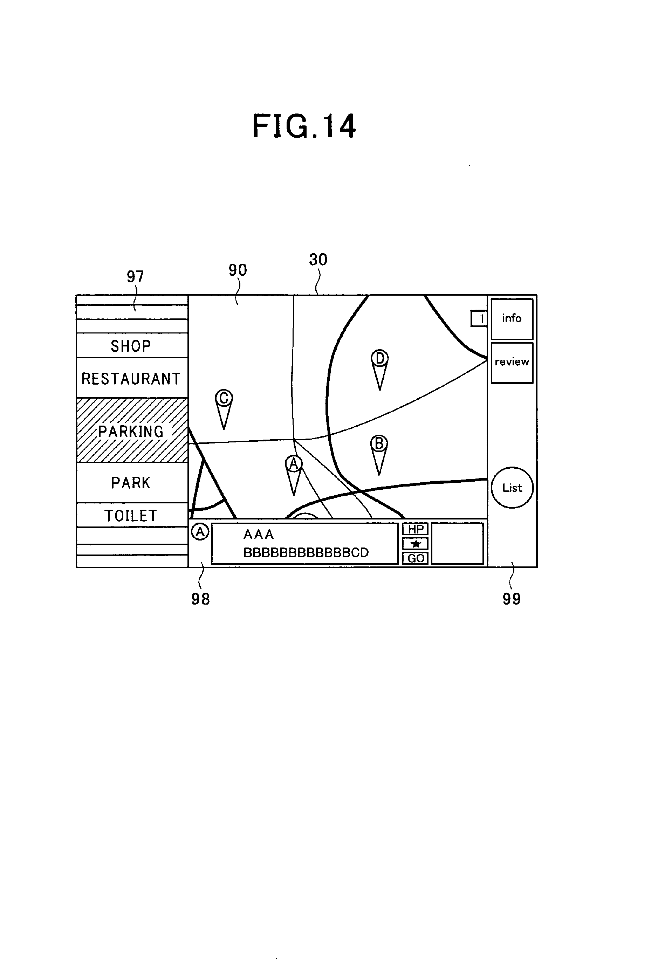

When an operation of moving to the map screen is executed on the home menu screen or when the hardware button 3 3c is operated, the screen is moved to the map screen on the second column from the left side and the first line from the upper side in Fig. 4. On the map screen, as described later with reference to Fig. 12, a map is displayed on LCD 30 so as to enable search of a destination or display of information concerning stores, etc. When the hardware button 33a is operated under the state that the map screen is displayed, the screen is moved to the screen on the second column from the right side and the second line from the upper side in Fig. 4 to display "Audio Control" described above and display a sub function and a slider. As described later with reference to Fig. 13, on this screen, the reproduction based on the reproducing unit 34 can be controlled, setting of a route, etc. can be performed by the sub function and reduction of a map can be changed by the slider. When the hardware button 33a is operated again under the state that such a screen is displayed, the screen is moved to the screen on the second column from the left side and the third line from the upper side in Fig. 4, and a submenu, a display mode switch and map information are displayed.
As described later with reference to Fig. 14, on such a screen, prescribed information of stores, etc. can be displayed on the map by the sub menu, and also details of the displayed stores can be referred to as spot information. Furthermore, the display mode can be changed by the display mode switch. When the hardware button 33a is operated again under the state that such a screen is displayed, the screen is returned to the screen on the second column from the left side and the first line from the upper side in Fig. 4.

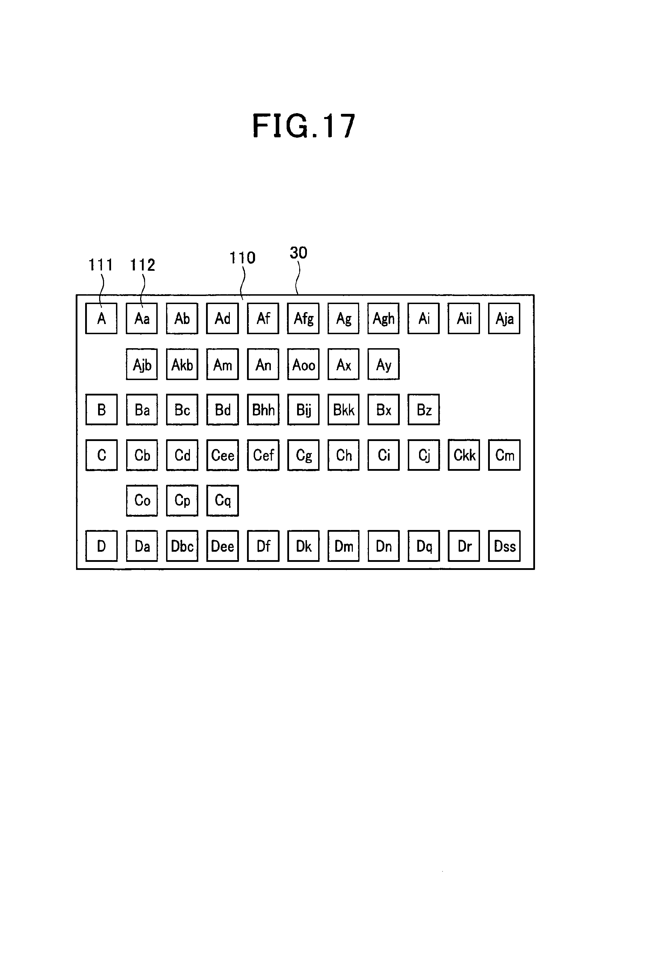

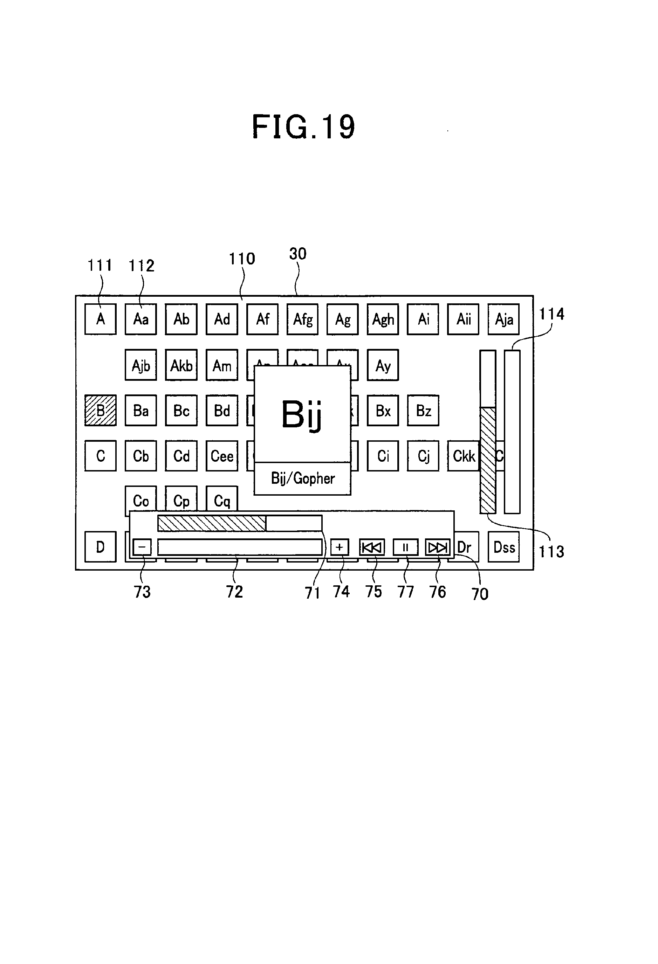

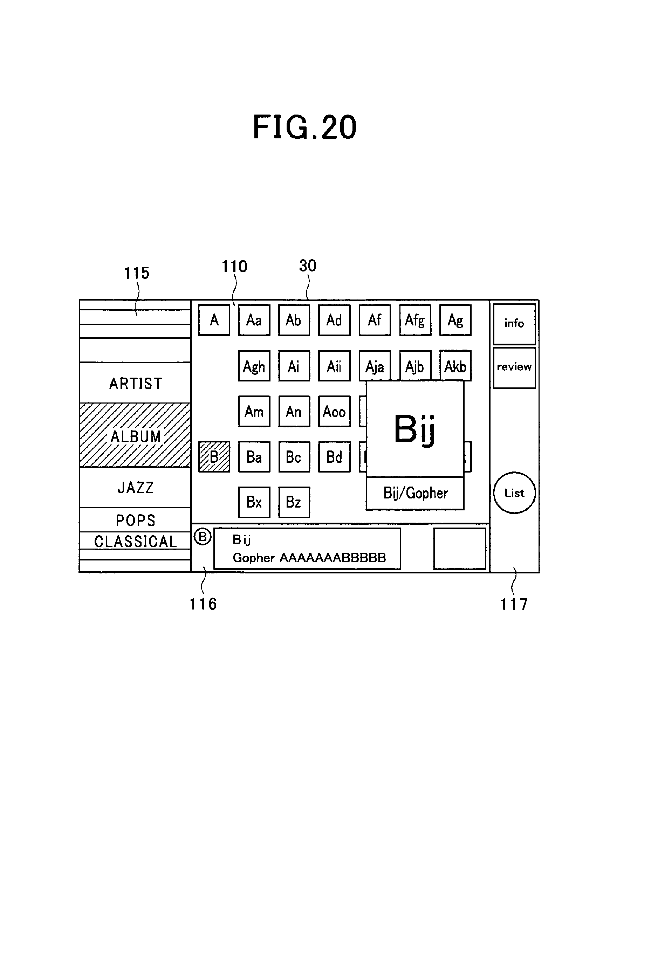

When an operation of moving to the music screen is executed on the home menu screen, the screen is moved from the third column from the left side and the first line from the upper side in Fig. 4. As described later with reference to Fig. 17, on the music screen, icons representing music data are displayed on LCD 30, and the icon corresponding to desired music data can be selected to produce the desired music data. When the hardware button 33a is operated under the state that the music screen is displayed, the screen is moved to the screen on the third column from the left side and the second line from the upper side in Fig. 4, "Audio Control" described above is displayed and also a slider is displayed. As described later with reference to Fig. 19, on this screen, the reproduction of the reproducing unit 34 can be controlled, and the display magnification of the icon can be changed by the slider. When the hardware button 33a is operated again under the state that such a screen is displayed, the screen is moved to the screen on the third column from the left side and the third line from the upper side in Fig. 4 to display a sub menu, a display mode switch and music information. As described later with reference to Fig. 20, on such a screen, displayed icons can be rearranged or selected (refined) through the sub menu, and also the details of the displayed icons can be referred to as music information. Furthermore, the display mode can be changed by the display mode switch. When the hardware button 33a is operated again under the state that such a screen is displayed, the screen is returned to the screen on the third column from the left side and the first line from the upper side in Fig. 4.

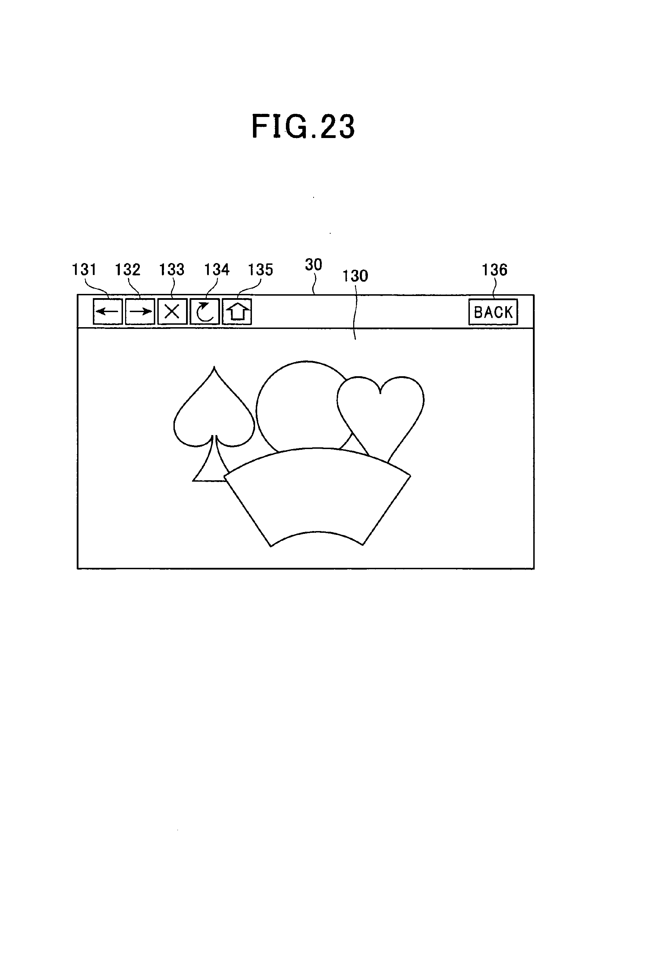

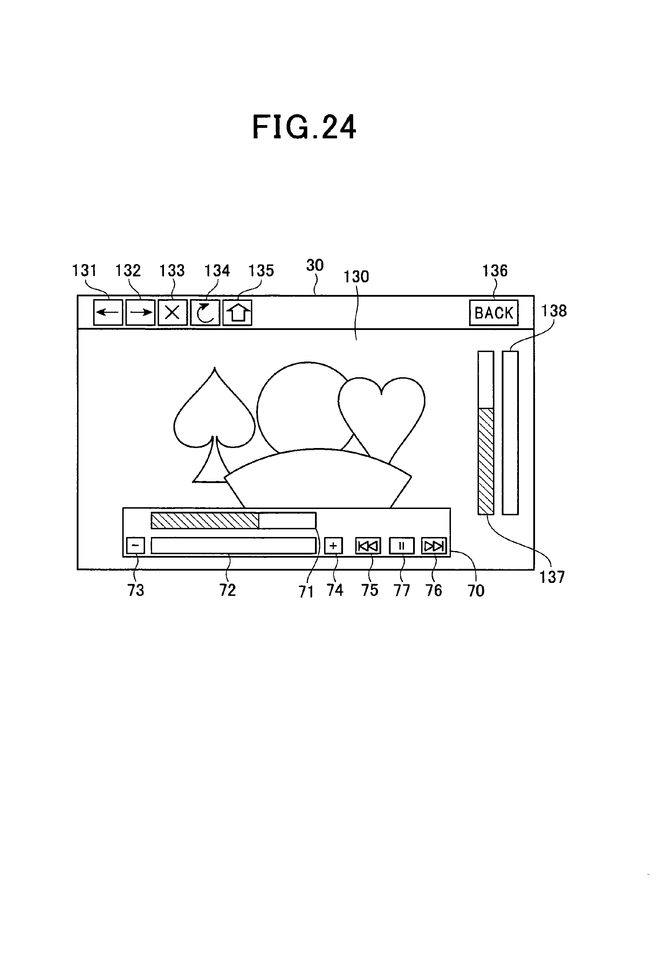

When an operation of moving to the Internet screen is executed on the home menu screen, the screen is moved to the Internet screen from the fourth column from the left side and the first line from the upper side in Fig. 4. As described later with reference to fig. 23, contents stored in a predetermined WEB server existing on the Internet on the Internet screen can be browsed. When the hardware button 33a is operated under the state that the Internet screen is displayed, the screen is moved to the screen on the fourth column from the left side and the second line from the upper side in Fig. 4 to display "Audio Control" described above and also display a sub function and a slider. As described later with reference to Fig. 24, on this screen, the reproduction of the reproducing unit 34 can be controlled and also the display magnification of the contents can be changed by the slider. When the hardware button 33a is operated again under the state that such a screen is displayed, the screen is moved to the screen on the fourth column from the left and the third line from the upper side in Fig. 4 to display a sub menu, a display mode switch and home page information. On such a screen, displayed icons can be rearranged or selected by the sub menu, and also the details of the displayed icons can be referred to as the home page information. Furthermore, the display mode can be changed by the display mode switch. When the hardware button 33a is operated again under the state that such a screen is displayed, the screen is moved to the screen on the fourth column from the left side and the first line from the upper side in Fig. 4.

As described above, in the information terminal device 10 according to the embodiment of the present invention, by selecting a prescribed item on the home menu screen (orbyoperating the hardware button 33c), the screen can be moved to the screen of a desired mode such as the map screen, the music screen, the Internet screen or the like. Furthermore, by operating the hardware button 33a on each screen, the screen can be moved to the screen of a desired hierarchy. In the example of Fig. 4, a setup screen, etc. are omitted from the illustration. Furthermore, by operating the hardware button 33a on the reference screen of each operation mode, "Audio Control" as an audio controller for controlling music data to be reproduced by the reproducing unit 34 is displayed on the display screen which is next (second) to each reference screen. Therefore, in any operation mode, the audio control can be easily performed.

Next, the processing executed when the information terminal device 10 is started or when the hardware button 33b is operated will be described with reference to the flowchart shown in Fig. 5. When the information terminal device 10 is started or when the hardware button 3b is operated, CPU 20a determines "Yes" in step S10, and goes to step S11. When neither the former case nor the latter case is satisfied, CPU 20a determines "No", and goes to step S14. In step S11, CPU 20a reads out information for displaying the home menu screen from HDD 20d, and supplies the information to the drawing processor 20e. The drawing processor 20e executes the drawing processing on the basis of the information supplied from CPU 20a, converts the obtained information to a video signal and supplies the video signal to LCD 30 to display the video signal. As a result, a home menu screen 60 as shown in Fig. 6 is displayed on LCD 30. In this display example, plural rectangles are displayed in the screen, a character array representing a menu item and an icon are displayed in each rectangle. A character array corresponding to a part of the menu item of the lower hierarchy represented at the right side of Fig. 3 is displayed as the character array of the menu item. In the example of Fig. 6, the rectangles corresponding to "MAP", "ROUTE" and "memory" corresponding to "NAVIGATION" of Fig. 3, and the rectangles corresponding to "MY MUSIC" and "SD MUSIC" corresponding to "MUSIC" of Fig. 3 are displayed. Furthermore, the icons corresponding to the respective menu items are displayed at the left side of the respective character arrays.

The display is omitted in Fig. 6. In Fig. 3, the menu items belonging to the same upper hierarchy are displayed with the same display color. That is, "MAP", "ROUTE" and "MEMORY" corresponding to "NAVIGATION" are displayed with the same color, and "MY MUSIC" and "SD MUSIC" corresponding to "MUSIC" are displayed with the same color which is different from the above color. Furthermore, each rectangle is displayed as being broader in the vertical direction as it approaches to the center in the vertical direction on LCD 30, and also displayed as being narrower as it is farther away from the center. This display manner can make a user recognize that the rectangles are arranged along the side surface of an elliptic cylinder or a cylinder. In Fig. 6, by tracing the screen in the vertical direction, an input moving in the vertical direction is given to the touch panel 31, and CPU 20a scrolls the rectangles displayed on LCD 30 on the basis of this input, whereby a desired item can be displayed. That is, CPU 20a refers to the position information output from the touch panel 31, and when it is detected that a user's finger moves in the vertical direction, the rectangles are displayed as if they are rotated in the direction from the movement start position of the finger to the movement end position of the finger and at the rotational speed corresponding to the moving distance or the moving speed of the finger. As a result, for example, when the screen is traced from the upper side to the lower side , the rectangles are rotated (inertial scroll) in the direction from the upper side to the lower side at the rotational speed corresponding to the moving speed or moving distance of the finger.

When a predetermined software button (the rectangle in the example of Fig. 6) is selected on the screen shown in Fig. 6, CPU 20a determines that the software button is operated (step S12; Yes), CPU 20a goes to step S13. In the other case (step S12; No), CPU 20a goes to step S14. For example, when a predetermined rectangle is selected by a user in Fig. 6, "Yes" is determined in step S12, and CPU 20a goes to step S13. Specifically, when "MAP" shown in Fig. 6 is selected, CPU 20a obtains from HDD 20d information for displaying the map screen on the second column from the left side and the first line from the upper line in Fig. 4, and supplies the information to the drawing processor 2e to display the information on LCD 30.

In step S14, CPU 20a determines whether the processing is finished or not. If the processing is not finished (step S14; No), CPU 20a returns to step S10 to repeat the same processing. In the other case (step S14; Yes), the processing is finished.

Through the above processing, when the information terminal device 10 is started or when the hardware button 33b is operated, the screen is moved to the home menu screen shown in Fig. 6, and also when a prescribed software button is operated on the home menu screen, the corresponding processing is executed.

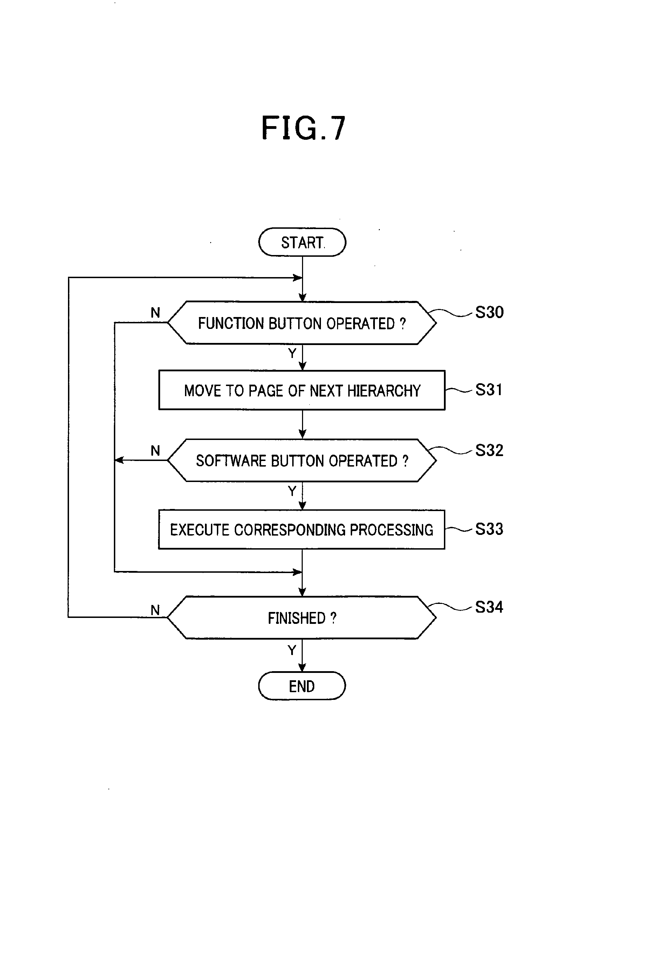

Next, the processing executed when the hardware button 33a is operated will be described with reference to Fig. 7. When it is determined that the hardware button 33a is operated (step S30: Yes), CPU 20a goes to step S31. In the other case (step S30; No), CPU 20a goes to step S34. For example, when the hardware button 33a is operated under the state that the screen shown in Fig. 6 is displayed, CPU 20a determines that the hardware button 33a is operated (step S30; Yes), and goes to step S31.

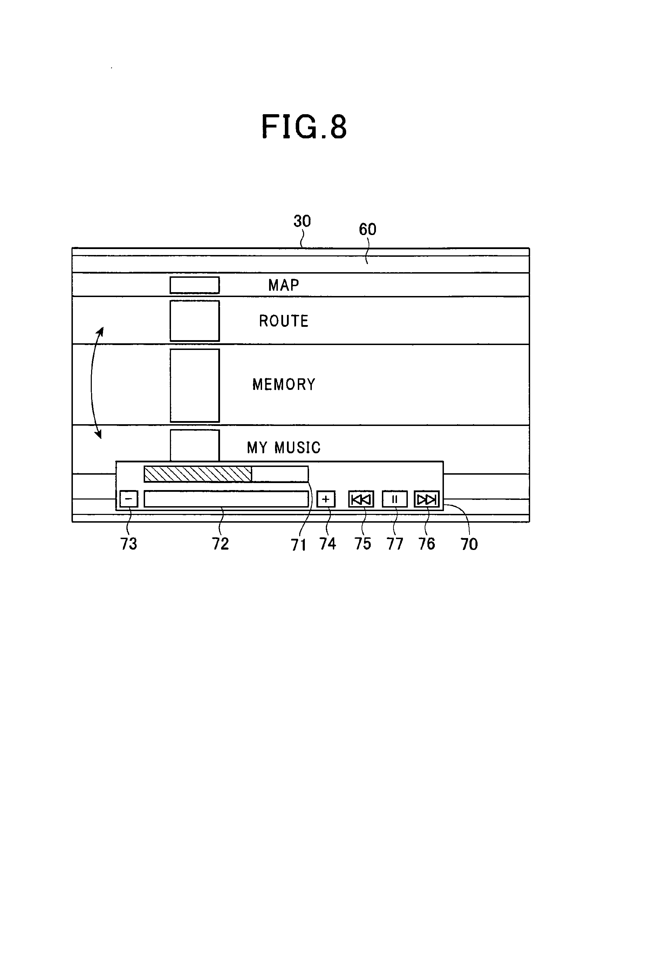

In step S31, CPU 20a obtains information for displaying the screen of a next hierarchy from HDD 20d and supplies the information to LCD 30 to display the information. For example, when the hardware button 33a is operated under the state that the screen shown in Fig. 6 is displayed, CPU 20a obtains from HDD 20d information for displaying the screen on the first column from the left side and the second line from the upper side in Fig. 4, and supplies the information to the drawing processor 20a. As a result, the screen shown in Fig. 8 is displayed on LCD 30. In the display example shown in Fig. 8, an audio operating area 70 corresponding to "Audio Control" shown in Fig. 4 is displayed below the screen. In this example, a volume indicator 71, a volume adjusting area 72, volume buttons 73 and 74, skip buttons 75 and 76 and a temporary stop button 77 are displayed in the audio operating area 70. Here, the volume indicator 71 displays the level of a set output volume by a bar graph. With respect to the volume adjusting area 72, the volume can be adjusted by tracing the corresponding area to the right or left direction. For example, the volume can be lowered by pressing a predetermined area of the volume adjusting area 72 with a finger and moving the finger to the left side with keeping the press of the finger. The operating direction of the volume adjusting area 72 is set to be perpendicular to the operating direction in which the rectangle of the home menu is rotated, and thus this operation can be prevented from being erroneously recognized. That is, the rectangle rotating direction corresponds to the up-and-down direction of Fig. 8 whereas the volume adjusting direction corresponds to the right-and-left direction. These directions are perpendicular to each other, and thus an operation acting in one direction can be prevented from being erroneously recognized that the operation concerned acts in the other direction.

The volume buttons 73 and 74 are buttons for reducing or increasing the volume step by step. The skip buttons 75 and 76 are buttons for returning or feeding forward music pieces being reproduced one by one. The temporary stop button 77 is a button for stopping the reproduction of music.

Next, CPU 20a determines in step S32 whether a prescribed software button is operated or not on the screen shown in Fig. 8. When it is determined that the prescribed software button is operated (step S32; Yes), CPU 20a goes to step S33. In the other case (step S32; No), CPU 20a goes to step S34. For example, when the volume indicator 71, the volume adjusting area 72, the volume buttons 73 and 74, the skip buttons 75 and 76 or the temporary stop button 77 is operated on the screen shown in Fig. 8, CPU 20a goes to step S33 to execute the processing corresponding to the operated button. Specifically, for example when the volume adjusting area 72 is traced from the right side to the left side, CPU 20a controls the reproducing unit 34 to reduce the output sound volume.

CPU 20a determines in step S34 whether the processing is finished or not. When it is determined that the processing is not finished (step S34 ; No), CPU 20a returns to step S30 to repeat the same processing. In the other case (step S34 ; Yes), CPU 20a finishes the processing. For example, when it is determined that the processing is not finished, CPU 20a returns to step S30. When the hardware button 33a is operated again under the state that the screen shown in Fig. 8 is displayed, CPU 20a determines "Yes" in step S30, and goes to step S31. In step S31, CPU 20a obtains from HDD 20d information for displaying the screen on the first column from the left side and the third line from the upper side in Fig. 4, and supplies the information to the drawing processor 20a to display the information on LCD 30. As a result, the screen shown in Fig. 9 is displayed on LCD 30. In the example of Fig. 9, a sub menu 80 is displayed at the left side of the screen and a home menu screen 60 as a main menu is displayed at the right side.

Here, plural rectangles are displayed on the sub menu 80 as in the case of the main menu. Character arrays displayed in the rectangles correspond to the menu items of the upper hierarchies displayed at the left side of Fig. 3. That is, in the example of Fig. 9, character arrays "NAVIGATION", "MUSIC", " INTERNET " , "TOOL" and "SETUP" are displayed. Here, the sub menu 80 has a function of seeking the head of the main menu. That is, when "TOOL" is operated on the screen shown in Fig. 9, CPU 20a determines in step S32 of Fig. 7 that the software button is operated and goes to step S33 to change (highlight) the display color of the selected menu item on the sub menu 80 and displays it at the center portion of the sub menu 80. The lower menu items corresponding to the selected menu item on the sub menu 80 are displayed so as to be located at the uppermost position of the main menu.

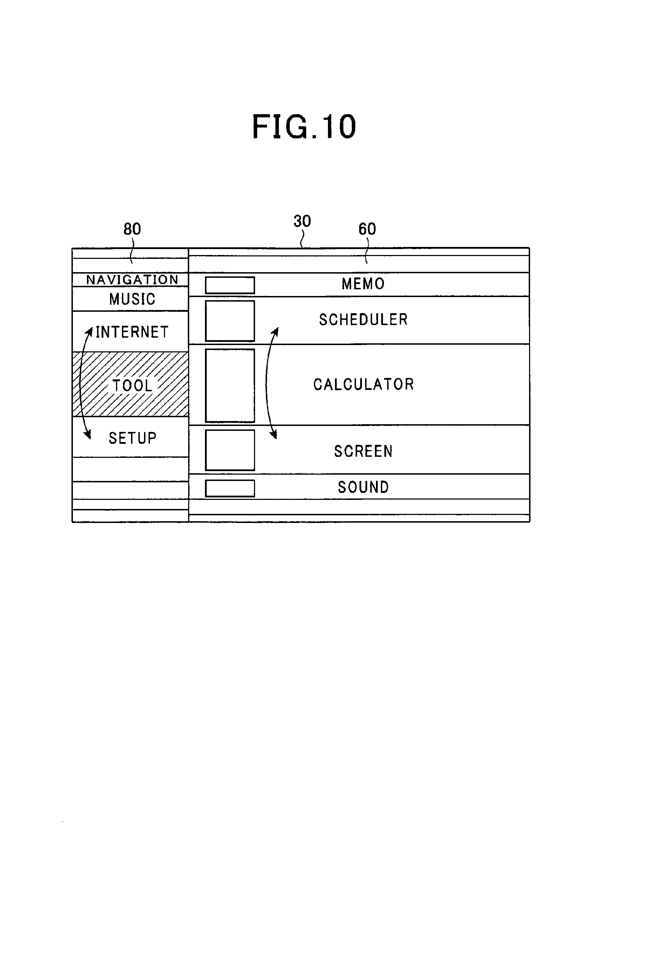

That is, in the case of "TOOL", the display of the sub menu 80 is changed so that the display color of "TOOL" is changed and "TOOL" is located at the center of the sub menu 80. The display is rotated (changed) so that "MEMO" belonging to the lower layer of "TOOL" shown in Fig. 3 is located at the uppermost portion of the main menu. As a result , "MEMO" is displayed at the uppermost position, "SCHEDULER" and "CALCULATOR" as the lower menu items of "TOOL" are subsequently displayed, and further "SCREEN" and "SOUND" as lower items of "SETUP" are subsequently displayed. Such head seeking is executed not only when the main menu is still, but also when the main menu is rotated (inertially scrolled). As a result, by selecting a predetermined item of the sub menu 80 when the main menu is rotated, a desired lower menu can be displayed. That is, in this embodiment, the head seeking of the main menu is enabled by the sub menu 80, whereby a desired item can be quickly found from the main menu. In the example of Fig. 10, the item selected on the sub menu 80 is located at the uppermost position of the main menu. However, it may be located at the center portion or at the lowermost position.

Furthermore, in the information terminal device 10 of this embodiment, when the main menu is rotated, the sub menu 80 is rotated interlockingly with the main menu. That is, when the main menu is traced by a user's finger and rotated, the sub menu 80 is also rotated in accordance with the content displayed on the main menu, and also the display color of the menu item corresponding to the sub menu 80 is changed (highlighted) in accordance with the content displayed on the main menu. For example, when the menu item corresponding to "TOOL" is displayed on the main menu; "TOOL" is displayed at the center of the sub menu 80 and the display color of "TOOL" is changed as shown in Fig. 10. When the main menu is rotated from the upper side to the lower side under such a state and the menu item corresponding to "INTERNET" is displayed on the main menu, "INTERNET" is displayed at the center of the sub menu 80 and the display color of "INTERNET" is changed as shown in Fig. 9. Accordingly, the user can known the type of the menu item of the upper hierarchy of the menu items displayed on the main menu.

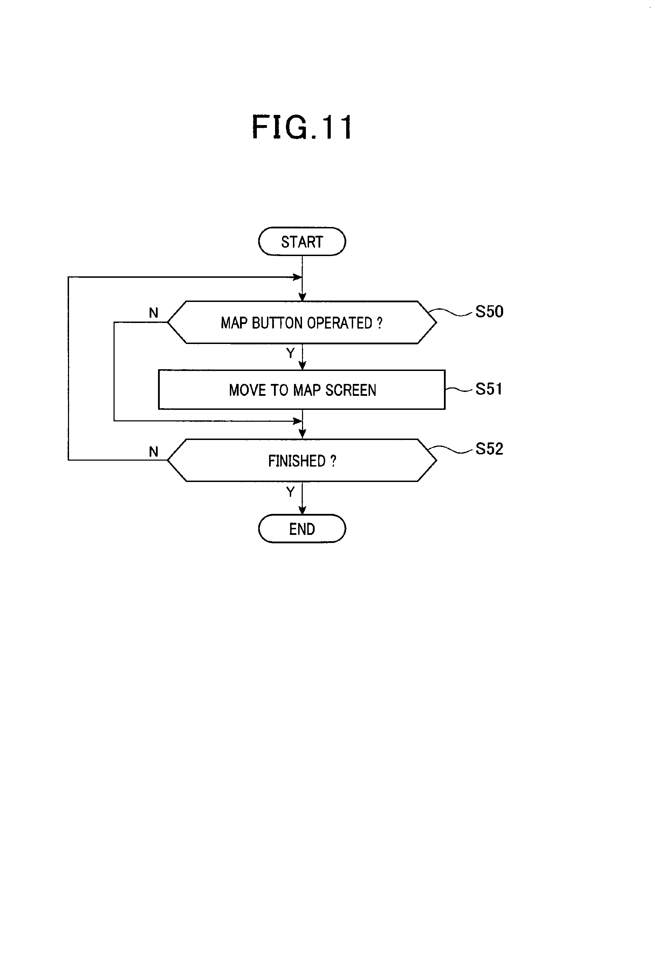

Next, the processing when the hardware button 33c shown in Fig. 1 is operated will be described with reference to Fig. 11. When this processing is executed, CPU 20a determines in step S50 whether the hardware button 33c is operated or not. When it is determined that the hardware button 33c is operated (step S50; Yes), CPU 20a goes to step S51. In the other case (step S50; No), CPU 20a goes to step S52. For example, when the hardware button 33c is operate by the user, CPU 20a determines "Yes", and goes to step S51. In step S51, CPU 20a obtains from HDD 20d information for displaying the map screen on the second column from the left side and the first line from the upper side in Fig. 4, and supplies the information to the drawing processor 20e to display the information on LCD 30. As a result, a drawing map 90 as shown in fig. 12 is displayed on LCD 30. In the example of Fig. 12, map information is displayed on the map screen 90, and also an icon 91 representing the direction and reduction scale, an icon 92 representing the present time and an icon 93 representing the position of the information terminal device itself (or the vehicle).

In step S52, CPU 20a determines whether the processing is finished or not. When the processing is not finished (step S52; No), CPU 20a returns to step S50 to repeat the same processing. In the other case (step S52; Yes), CPU 20a finishes the processing. Through the above processing, in a case where the hardware button 33c is operated by the user, the screen can be moved to the map screen 90 even when any screen is displayed.

Even when the map screen shown in Fig. 12 is displayed and the processing of Fig. 11 is executed, the processing shown in Fig. 7 described above is executed. Accordingly, when the hardware button 33a is operated under the state that the map screen shown in Fig. 12 is displayed, the screen is moved to the screen of the next hierarchy (step S31). Specifically, CPU 20a obtains from HDD 20d information for displaying the screen on the second column from the left side and the second line from the upper side in Fig. 4, and supplies the information to the drawing processor 20e to display the information on LCD 30. As a result, information shown in Fig. 13 is displayed on LCD 30. In a display example of Fig. 13, the software button 94 operated to execute route search is displayed at the left end within the screen. A zoom indicator 95 representing the reduction scale of the currently displayed map and a zoom area 96 operated to change the reduction scale are displayed at the left side within the screen. The same audio operating area 70 as shown in Fig. 8 is displayed at the lowermost position within the screen. For example when the software button 94 is operated on the screen as described above, a route to a destination is searched and displayed. Furthermore, when the zoom area 96 is traced by a finger, the reduction scale of the map is changed in accordance with the traced direction and distance. For example, when the zoom area 96 is traced from the upper side to the lower side, the reduction scale is increased in accordance with the movement distance of the finger. Conversely, when the zoom area 96 is traced from the lower side to the upper side, the reduction scale is reduced in accordance with the movement distance of the finger. Furthermore, when the audio operating area 70 is operated, music data being produced is controlled as in the case described above. The operating directions of the zoom area 69 and the volume adjusting area 72 are perpendicular to each other, and thus an operation executing on one of them can be prevented from being erroneously recognized that the operation concerned is executed on the other.

When the hardware button 33a is operated under the state that the screen shown in Fig. 13 is displayed, CPU 20a obtains from HDD 20d information for displaying the screen on the second column from the left side and the third line from the upper side in Fig. 4, and displays the information on LCD 30. As a result, a screen shown in Fig. 14 is displayed. In the display example shown in Fig. 14, a sub menu 97 is displayed at the left side within the screen, and spot information 98 onwhich the information corresponding to the icon displayed on the map screen 90 is displayed is displayed at the lower portion within the screen. Furthermore, a display mode switching area 99 is displayed at the right side within the screen. Here, the sub menu 97 is operated when predetermined facilities or the like on the map are indicated. In this example, the sub menu 97 is displayed in the same display style as shown in Fig. 9, and a desired item can be selected from plural items. In this example, plural rectangles containing "SHOP", "RESTAURANT", "PARKING", "PARK", "TOILET" respectively are displayed on the sub menu 9. For example when "PARKING" is selected, as shown in Fig. 14, the display color of the corresponding rectangle is changed and also the display is scrolled so that the rectangle concerned is located at the center of the sub menu 97. Furthermore, parking places existing within the area of the map displayed on the map screen 90 are searched, and icons to which alphabets are appended are displayed at points where the respective parking places exist. In the example of Fig. 14, icons to which A to D are appended are displayed at positions where the parking places exist. Detailed information corresponding to the icons displayed on the map is displayed in the spot information 98. In this example, information corresponding to "A" of the icon is displayed. For example, a document and an image for explaining the parking place corresponding to "A" of the icon are displayed, and a button for moving to the home page of the parking place concerned, a button for registering the parking place concerned into a bookmark and a button for setting the parking place concerned to a destination are displayed. In a display mode switching area 99 are displayed an "info" button for displaying information concerning individual facilities as spot information 98, a "review" button for displaying word-of-mouth information as spot information 98 concerning individual facilities, and a "List" button for displaying spot information in the whole area of the map screen 90 are displayed. The "info" button and the "review" button are alternative buttons, any one of these buttons can be selected. In the example of Fig. 14, the "info" button is selected, and information concerning individual facilities is displayed as the spot information 98.

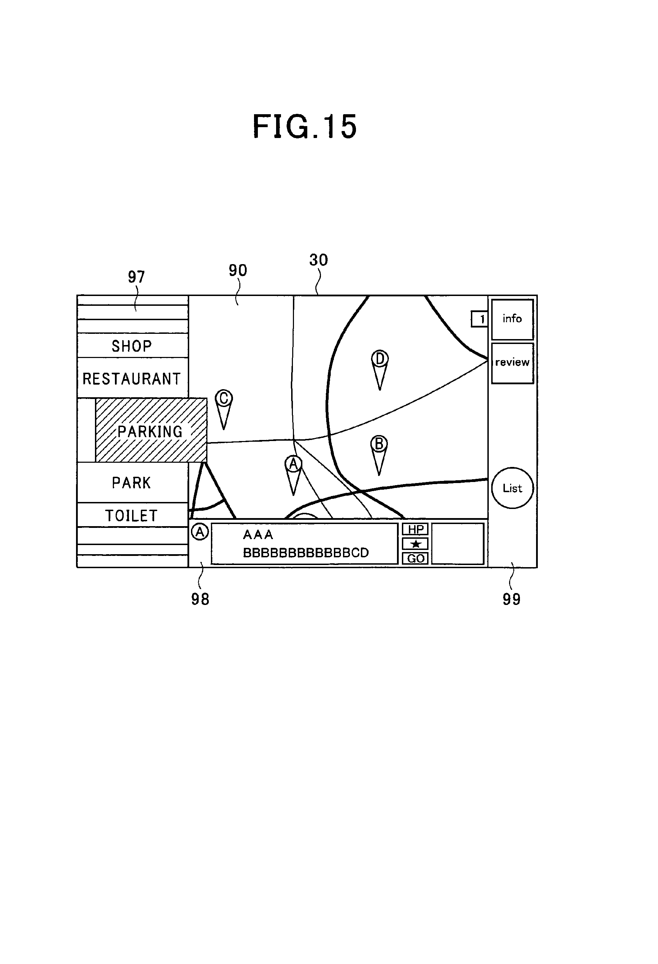

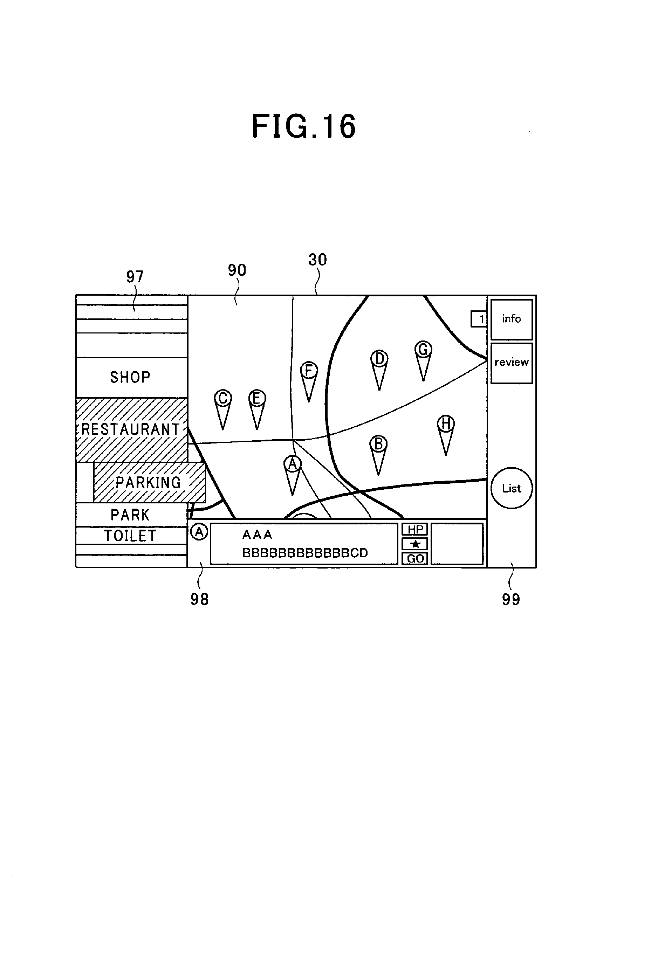

On the sub menu 97, the rectangle corresponding to the menu item can be alternatively selected. That is, even when any menu item is selected, the other items are excluded from selection. In this embodiment, plural menu items can be selected. For example, as shown in Fig. 14, when the user traces the rectangle of the menu item of "PARKING" to the right side by his/her finger under the state that "PARKING" concerned is selected, CPU 20a determines that an operation of fixing the selection of the menu item is executed, and the rectangle of "PARKING" concerned is highlighted while it protrudes to the right side as shown in Fig. 15. As a result, the selection of the menu item of "PARKING" is set to be fixed. As a result, the display of the icons concerning the parking places displayed on the map is kept. Subsequently, when "RESTAURANT" is selected under the state as described above, CPU 20a detects that "RESTAURANT" is selected together with "PARKING", and obtains the information concerning "RESTAURANT" existing on the map from HDD 20d to display the information as icons. As a result, as shown in Fig. 16, icons "E" o "H" representing restaurants are displayed on the map screen 90 together with the icons "A" to "D" representing the parking places. Furthermore, on the submenu 97, the finally selected "RESTAURANT" is scrolled to move to the center portion of the sub menu 97, and the display colors of the menu items of the selected "RESTAURANT and "PARKING" are changed (highlighted). As a result, the user can simultaneously display the information concerning plural kinds of facilities on the map screen 90, and thus the user can also find a parking place existing in the vicinity of a target restaurant. Furthermore, on the sub menu 97, the display color of the selected menu item is changed, and thus it can be known which menu item is selected. Furthermore, the operated menu item is displayed in the vicinity of the center of the sub menu 97, and thus the operated menu item can be known. In the example shown in Fig. 16, two kinds of menu items are selected, however, three or more kinds of menu items can be selected by arbitrarily drawing out the menu item to the right side. Furthermore, the selection of the drawn-out menu item can be released by moving the drawn-out menu item to the left side (the operation of tracing to the left side).

When the "List" button displayed in the display mode switching area 99 is operated on the screen shown in Fig. 16, the spot information 98 corresponding to the icons "A" to "H" displayed on the map is displayed in a list style. That is, when the "List" button is operated, information associated with the icons "A" to "H" displayed on the map is displayed in a list style in the case of selection of the "info" button, and word-of-mouth information associated with the icons "A" to "H" is displayed in a list style in the case of selection of the "review" button. The list-displayed spot information can be scrolled as occasion demands. Specifically, the list-displayed information is traced to the upper side or the lower side by a finger, whereby it can be scrolled upwardly or downwardly. Accordingly, even when all the information cannot be displayed at one time on the screen, all the information can be browsed by the scroll.

Next, when "MY MUSIC" is selected on the main menu after "MY MUSIC" is selected on the main menu of the screen shown in Fig. 6 or "MUSIC" is selected on the sub menu 80 of the screen shown in Fig. 9, CPU 20a obtains information for displaying the screen on the third column from the left side and the first line from the upper side in Fig. 4 from HDD 20d, and supplies the information to the drawing processor 20e to display the information on LCD 30. As a result, a music screen 110 as shown in Fig. 17 is displayed. In this example, icons 112 corresponding to albums of music data stored in HDD 20d are displayed in a list style in alphabetical order. Indexes 111 of alphabets are displayed at the left end on the screen. More specifically, icons having album names "Aa", "Ab", ...., "Ay" are displayed at the right side of the index "A". Furthermore, icons having album names "Ba", "Bc", ..., "Bz" are displayed in a list style at the right side of the index "B", and icons concerning "B", "C" and "D" are likewise displayed.

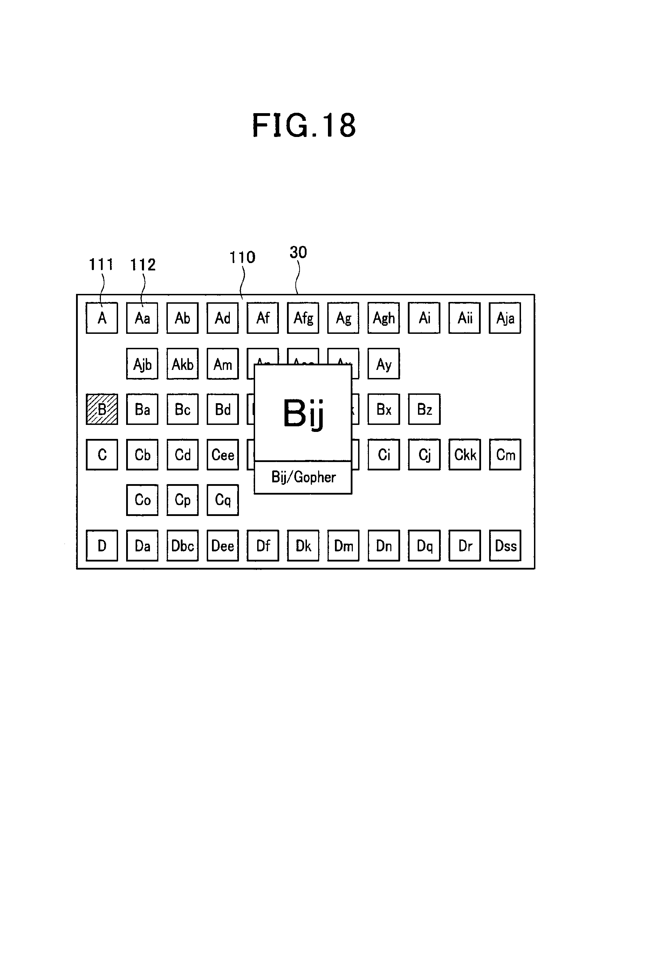

When a predetermined icon is selected on the music screen 110 as described above by user's finger, CPU 20a displays the selected icon while enlarging the icon concerned, obtains the music data corresponding to the selected icon from HDD 20d and makes the reproducing unit 34 to reproduce the music data. For example, when the user selects an icon "Bij" on the screen shown in Fig. 17, as shown in Fig. 18, the icon "Bij" is displayed while enlarged, and also attribute information concerning the icon "Bij" (for example, the album name "Bij" and the artist name "Gopher") are displayed below the icon. Furthermore, CPU 20a obtains the music data corresponding to the icon "Bij" from HDD 20d, and supplies the music data to the reproducing unit 34. As a result, the reproducing unit 34 reproduces the music data, and outputs the thus-obtained audio signal to the connection terminal 35a. Consequently, the user can appreciate the music corresponding to the indicated icon "Bij" by a headphone or the like.

When the user operates the hardware button 33a under the state that the music screen 110 as shown in Fig. 18 is displayed, CPU 20a determines "Yes" in step S30 of Fig. 7, and goes to step S31 to obtain information for displaying the screen on the third column from the left side and the second line from the upper side in Fig. 4 from HDD 20d and supply the information to the drawing processor 20e so that the information is displayed on LCD 30. As a result, a screen shown in Fig. 19 is displayed on LCD 30. The same audio operating area 70 as shown in Fig. 8 is displayed at the lowermost portion on the screen. Furthermore, an indicator 113 representing the present display size of the icon, and a zoom area 114 for changing the display size of the icon are displayed at the right side on the screen. The user can perform the control concerning the reproduction of the music by operating the software button displayed in the audio operating area 70 on the screen as described above. Furthermore, by tracing the zoom area 114, the display size of the icon can be changed. Specifically, by tracing the zoom area 114 from the upper side to the lower side, the display size of the icon is reduced, and by tracing the zoom area 114 from the lower side to the upper side, the display size of the icon is enlarged. A method of changing the display size of an icon can be implemented by generating plural kinds of icons of small size from the icon of the maximum size according to the processing of thinning out pixels, selecting an icon matched with a target size from the plural icons and displaying the icon concerned. Or, the method may be implemented by generating icons having different information amounts ever size in advance, selecting an icon matched with a target size from the plural icons and displaying the icon concerned. The latter method will be described in detail. For example, with respect to an icon having a large size, not only the title of an album, but also the artist name and other information are displayed. In addition, the icon is generated so that the whole photograph of the album is clearly displayed. With respect to an icon having a small size, information other than the title is not displayed, and also with respect to the title and the photograph, only a part of them (for example, only a part of the title or only a part of the photograph) is displayed in accordance with the size. That is, the information amount to be displayed may be changed. That is, by tracing the zoom area 114, not only the display size of the icon, but also the information amount of the information to be displayed may be variable. Accordingly, visibility can be enhanced by increasing/reducing the information amount in accordance with the display size. The operating directions of the zoom area 114 and the volume adjusting area 72 are perpendicular to each other, and thus an operating executing on one of them can be prevented from being erroneously recognized as an operation executing on the other.

Subsequently, when the user operates the hardware button 33a again under the state that the screen shown in Fig. 19 is displayed, CPU 20a determines "Yes" in step S30 of Fig. 7, and goes to step S31 to obtain information for displaying the screen on the third column from the left side and the third line from the upper side in Fig. 4 from HDD 20d and supply the information to the drawing processor 20e to display the information on LCD 30. As a result, a screen shown in Fig. 20 is displayed on LCD 30. In a display example shown in Fig. 20, a sub menu 115 is displayed at the left side on the screen, music information 116 is formed at the lowermost position on the screen, and a display mode switching area 117 is displayed at the right side on the screen. Here, with respect to the sub menu 115, a method of arranging icons displayed in a list style on the music screen 110 can be selected and also the icons displayed in a list style can be refined. In this example, "ALBUM" and "ARTIST" are menu items for determining the arrangement method of the icons. "ALBUM" arranges icons in accordance with the album name, and "ARTIST" arranges icons in accordance with the artist name. Any one of them can be selected. Furthermore, "JAZZ", "POPS" and "CLASSICAL" are menu items for defining icons displayed in a list style. That is, "JAZZ", "POPS" and "CLASSICAL" are menu items for selecting icons belonging genre such as jazz, pops and classic. In the example of Fig. 20, "ALBUM" is selected on the sub menu 115, and thus icons are displayed in alphabetical order in accordance with the album names on the music frame. Furthermore, detailed information concerning music being current reproduced and the icon are displayed as the music information 116. The information displayed as the music information 116 can be selected by pressing an "info" button or a "review" button as described later. Furthermore, by operating a "List" button, the number of items to be displayed can be changed.

The "info" button, the "review" button and the "List" button are displayed in the display mode switching area 117. The "info" button and the "review" button can be alternatively selected. When the "info" button is selected, the detailed information concerning the music data is displayed as the music information 116, and when the "review" button is selected, the word-of-mouth information concerning the music data is displayed. Furthermore, the "List" button is operated when the music information 116 is displayed in the whole area of the music screen 110.

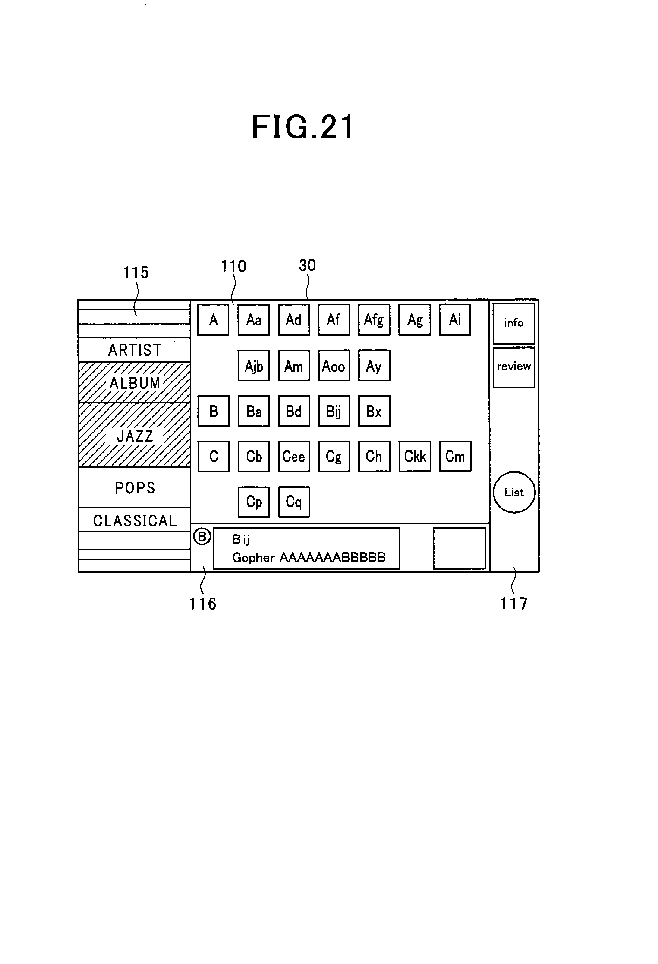

When "JAZZ" on the sub menu 115 is operated, CPU 20a recognizes that "JAZZ" is operated, and thus it changes the display color of "JAZZ" as a menu item and scrolls the menu item concerned so that the menu item concerned is located at the center position of the sub menu 115. Furthermore, CPU 20a selects only icons belonging to the genre of JAZZ from all icons displayed on the music screen 110 and displays the selected icons. As a result, LCD 30 is displayed on the screen as shown in Fig. 21. In this display example, "JAZZ" as the menu item is moved on the sub menu 115 so as to be located at the center position of the sub menu 115, and the display colors of "JAZZ" and "ALBUM" as the menu items are changed. Furthermore, as compared with Fig. 19, the types of the displayed icons are reduced on the music screen 110. For example, with respect to "A", in Fig. 19, seventeen types of icons are displayed, however in Fig. 21, they are reduced to ten types. That is, only the icons belonging to the genre of "JAZZ" are displayed on the music screen 110.

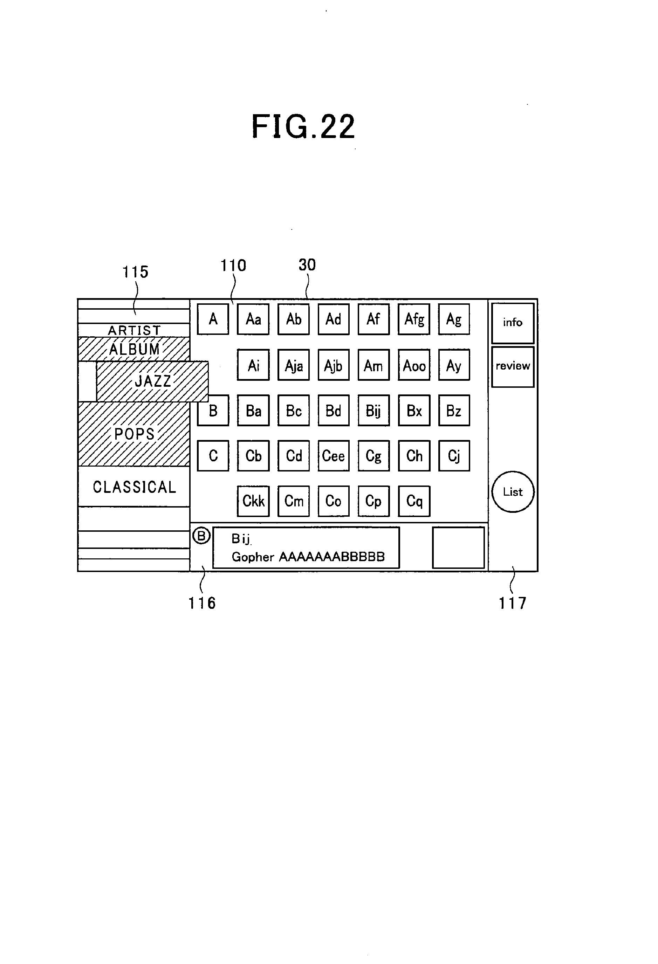

Next, it is assumed that on the screen shown in Fig. 21, "JAZZ" as a menu item of the sub menu 115 is traced from the left side to the right side by user's finger and then "POPS" as a menu item is selected. At this time, as shown in Fig. 22, CPU20a moves "JAZZ" as the menu item to the right side and displays it. Furthermore, CPU 20a changes the display color of the selected "POPS" , and scrolls the display of "POPS" so that "POPS" is located at the center position. CPU 20a selects music data belonging to Jazz or POPS in genre from music data stored in HDD 20d, and displays the selected music data in a list style. As a result, on the screen of Fig. 22, the icons corresponding to the music data belonging to POPS are displayed while added to the music screen 110 of Fig. 21. For example, with respect to "A", "Ab" and "Aja" as icons of music data belonging to POPS are added.

As described above, on the sub menu 115, the method of arranging the icons of the music data can be selected, and the genre can be selected, so that target music data can be easily found out. Furthermore, on the sub menu 115, the selection of the genre can be fixed by drawing out the menu item to the right side, so that plural genres can be selected and displayed, for example.

When "BROWSER" as a menu item is selected on the main menu screen shown in Fig. 6 or when "INTERNET" as a menu item is selected on the sub menu 80 shown in Fig. 9 and then "BROWSER" is selected from the main menu, CPU 20a obtains from HDD 20d information for displaying the screen on the fourth column from the left side and the first line from the upper side in Fig. 4, and supplies the information to the drawing processor 20e to display the information on LCD 30. As a result, the screen shown in Fig. 23 is displayed on LCD 30. In the display example shown in Fig. 23, a content obtained from a WEB server on the Internet (not shown) is displayed in a display area 130. Furthermore, software buttons 131 to 136 are displayed at the upper side of the display area 130. The software button 131 is a button operated to return to the previous page, and the software button 132 is a button operated to go to the next page. The software button 133 is a button operated when a request to the WEB server is ceased. The software button 134 is a button operated to re-try a request to the WEB server, and the software button 135 is a button operated to move to a page registered as a home. The software button 136 is a button operated to return to a screen (for example, map screen, music screen or the like) which was displayed previously.

When the hardware button 33a is operated under the state that the screen shown in Fig. 23 is displayed, CPU 20a obtains from HDD 20d information for displaying the screen on the four column from the left side and the second line from the upper side in Fig. 4, and supplies the information to the drawing processor 20e to display the information on LCD 30. As a result, a screen shown in Fig. 24 is displayed on LCD 30. In the display example shown in Fig. 24, the same audio operating area 70 as shown in Fig. 13 is displayed at the lowermost portion on the screen, and an indicator 137 representing the present display magnification and a zoom area 138 for changing the enlargement magnification are displayed at the right side on the screen. When a predetermined software button of the audio operating area 70 is operated on the display screen as described above, the reproducing unit 34 can be controlled in accordance with the operated button. Furthermore, by tracing the zoom area 138, the display magnification of images and characters displayed in the display area 130. That is, the display magnification can be reduced by tracing the zoom area 138 from the upper side to the lower side with a finger and also the display magnification is increased by tracing the zoom area 138 from the lower side to the upper side. Furthermore, the operating directions of the zoom area 138 and the volume adjusting area 72 are perpendicular to each other, and thus an operation executed on one of them can be prevented from being erroneously recognized that the operation concerned is executed on the other.

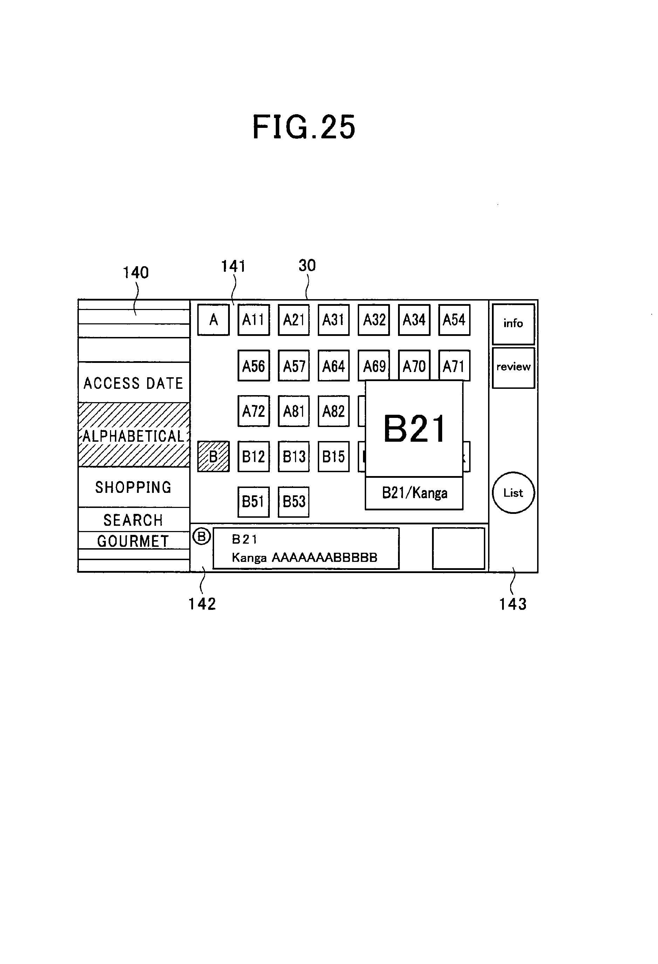

When the hardware button 33a is operated under the state that the screen shown in Fig. 24 is displayed, CPU 20a obtains from HDD 20d information for displaying the screen on the fourth column from the left side and the third line from the upper side in Fig. 4, and supplies the information to the drawing processor 20e to display the information on LCD 30. As a result, a screen shown in Fig. 25 is displayed. In the display example shown in Fig. 25, a sub menu 140 is displayed at the left side on the screen. A list of icons representing home pages registered as bookmarks is displayed, home page information 142 representing the detailed information of a selected icon is displayed at the lower side, and a display mode switching area 143 for switching the display mode is displayed at the right side. Here, a menu item for selecting the method of arranging icons displayed in a list style in the display area 141, and a menu item for refining icons are displayed on the sub menu 140. Specifically, "ACCESS DATE" and "ALPHABETICAL" are menu items for selecting the icon arranging method. "ACCESS DATE" arranges the icons in an access order, and "ALPHABETICAL" arranges icons in alphabetical order of the titles of home pages. These are alternatively selectable. Furthermore, "SHOPPING", "SEARCH", and "GOURMET" are menu items for selecting and displaying home pages whose categories belong to shopping, search engine and gourmet information. A plurality of these menu items can be selected as shown in Figs. 21 and 22. Furthermore, as home page information 142 is displayed information concerning the home page corresponding to the selected icon. Furthermore, software buttons "info", "review" and "List" are displayed in the display mode switching area 143. "info" is operated when information concerning the home page corresponding to each icon is selected as home page information 142, and "review" is operated when work-of-mouth information is displayed as home page information 142. "List" is operated when the home page information 142 is displayed on the whole area of the display area 141.

On the screen shown in Fig. 25, the method of arranging icons displayed in the display area 141 is indicated by operating the sub menu 140, and the category of icons can be selected. The home page information 142 is referred to from the icons displayed in the display area 141, and when a desired icon is selected, the home page corresponding to the icon is displayed in the display area 130.

As described above, according to this embodiment of the present invention, the menu items belonging to the upper hierarchy are displayed on the sub menu, and also the menu items belonging to the lower hierarchy are displayed on the main menu, whereby the display reflecting the hierarchical structure can be performed. Furthermore, the head seeking of the menu items displayed on the main menu is executed, and thus a desired menu item can be quickly found. Furthermore, when the main menu is scrolled, the menu item corresponding to the menu items displayed on the main menu is highlighted on the sub menu, and also it is displayed in the vicinity of the center of the sub menu. Therefore, the type of the menu items displayed on the main menu can be surely known.

Furthermore, in the embodiment of the present invention, the order arrangement and refining of icons can be performed on the sub menu. Therefore, a desired icon can be quickly found out from plural icons. Furthermore, the state that the menu item for refining is selected can be fixed on the sub menu. Therefore, icons belonging to plural categories can be simultaneously displayed. Furthermore, when the selection is fixed, the menu item is displayed so as to be protruded, and thus the selected item can be easily known.

Still furthermore, according to the embodiment of the present invention, when the hardware button 33a is operated on each frame shown on the first line of Fig. 4, the audio operating area 70 is displayed. That is, when the hardware button 33a is operated on each reference screen shown on the first line of Fig. 4, the audio operating area 70 is displayed on the display screen which is displayed next (secondly) to each reference screen. The control of the reproduction of audio has a higher priority as compared with the other controls. Therefore, irrespective of the processing being executed on any information, the audio operating area 70 is displayed on the display screen which is displayed next (secondly) to each reference screen when the hardware button 33a is operated, so that the audio control can be easily performed.

Furthermore, according to this embodiment, the operating direction of the volume adjusting area 72 and the operating direction of the main menu and the zoom areas 96, 114, 138 are perpendicular to each other. Therefore, an operation executed on one of them can be prevented from being erroneously recognized that the operation concerned is executed on the other. Therefore, the operationality can be enhanced.

In this embodiment of the present invention, the audio operating area 70 and the sliders 96, 114, 138 for adjusting the output state of audio information and image information as cognitive information are displayed on the same display screen when the hardware button 33a is once operated. Therefore, when it is necessary to operate cognitive information, the output state of the cognitive information can be adjusted by operating the hardware button 33a once irrespective of the selection of any operation mode.

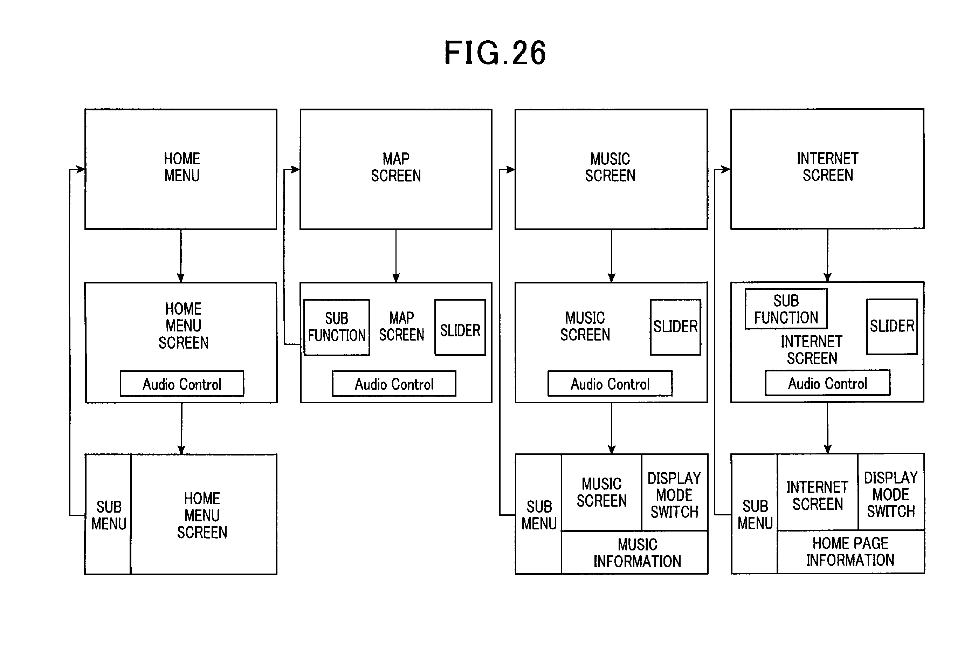

Next, the operation when the information terminal device 10 is mounted on the cradle 36 will be described. When the information terminal device 10 is mounted on the cradle 36, the operation mode is changed in accordance with whether the vehicle is running or not. Fig. 26 is a diagram showing an example of the hierarchical structure of the screen displayed on LCD 30 when the information terminal device 10 is mounted on the cradle 36 and the vehicle is running. In the example of Fig. 26, the screen on the second column from the left side and the third line from the upper side (the screen on which the sub menu, the display mode switch and the map information are displayed) on the map screen are excluded as compared with the case of Fig. 4. Furthermore, the display position of the audio operating area 70 is changed to a position which is far away from the icon 93 representing the position of the vehicle itself (not shown), and the range of the volume adjusting area 72 (not shown) is enlarged (the details are described later). As described above, when the information terminal device 10 is mounted on the cradle 36 and the vehicle is running, the screen for selecting information of stores, etc. to be displayed on the map (the screen on the second column from the left and the third line from the upper line in Fig. 4) is set to non-display. Therefore, by excluding information unnecessary for the driving from display targets, a driver can concentrate on the driving. Furthermore, the display position of the audio operating area 70 is changed to a position which is far away from the icon 93 representing the position of the vehicle itself, whereby the visibility of information existing around the position of the vehicle itself can be prevented from being lowered.

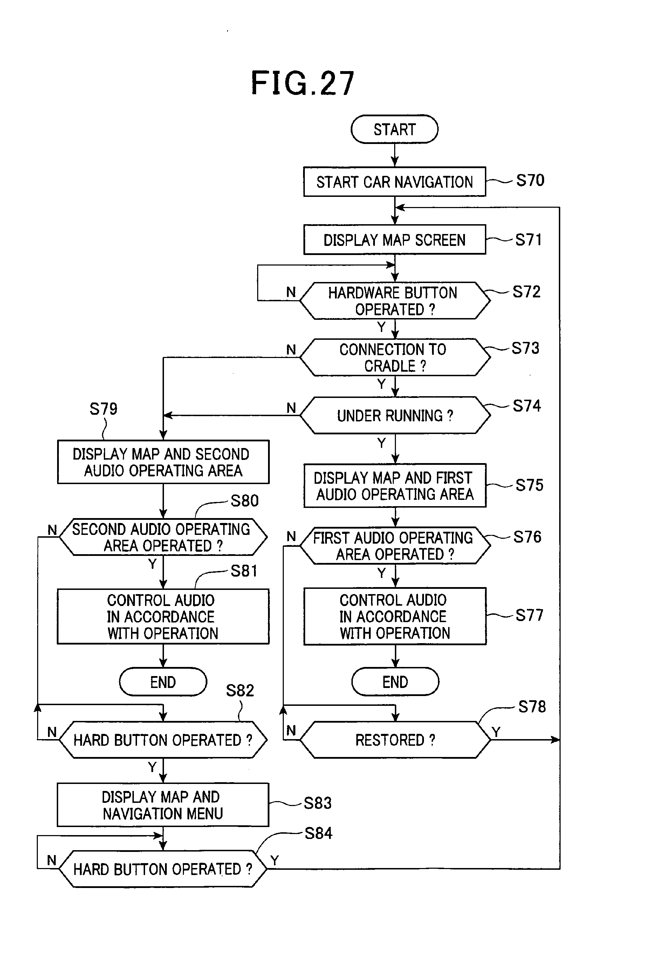

Next, the processing executed when the operation of starting car navigation (the map screen on the second line from the left side and the first line from the upper side in Fig. 26) under the state that the information terminal device 10 is mounted on the cradle 36 is executed will be described. When the processing shown in Fig. 27 is started, in step S70, CPU 20a starts the car navigation. Then, CPU 20a goes to step S71 to display the map screen shown in Fig. 12 on LCD 30. In step S72, CPU 20a determines whether the hardware button 33a is operated or not. When the operation is determined to be executed (step S72; Yes), CPU 20a goes to step S73. In the other case (step S72; No), the same processing is repeated.

In step S73, CPU 20a determines the connection to the cradle 36 or not. When the connection to the cradle 36 is determined (step S73; Yes), CPU 20a goes to step S74. In the other case (step S73; No), CPU 20a goes to step S79. Specifically, for example when the power source voltage of the vehicle supplied from the connection terminal 10a is detected, CPU 20a determines the connection to the cradle 36 and goes to step S74.

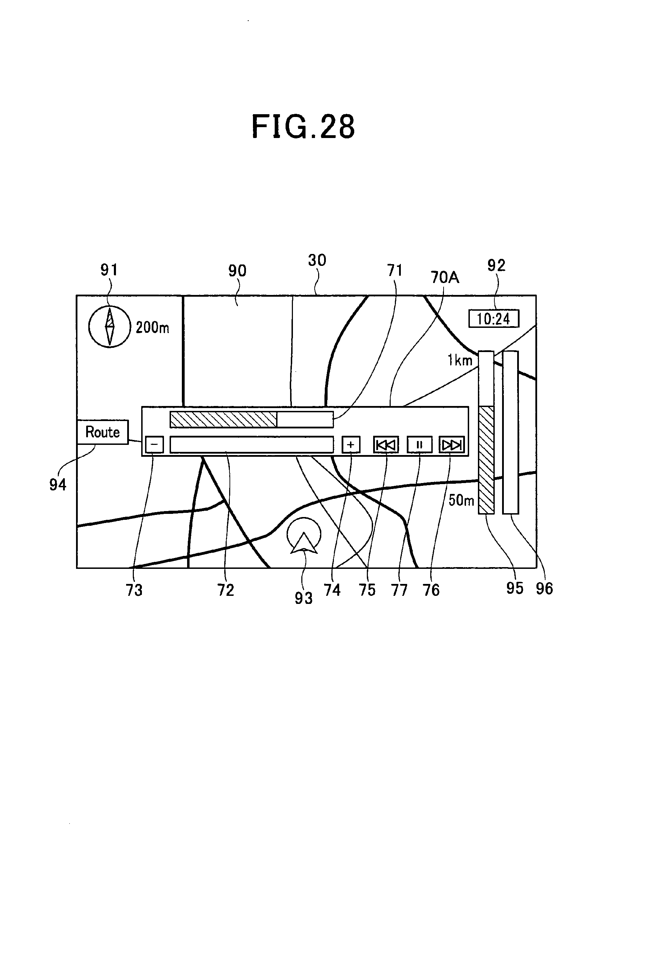

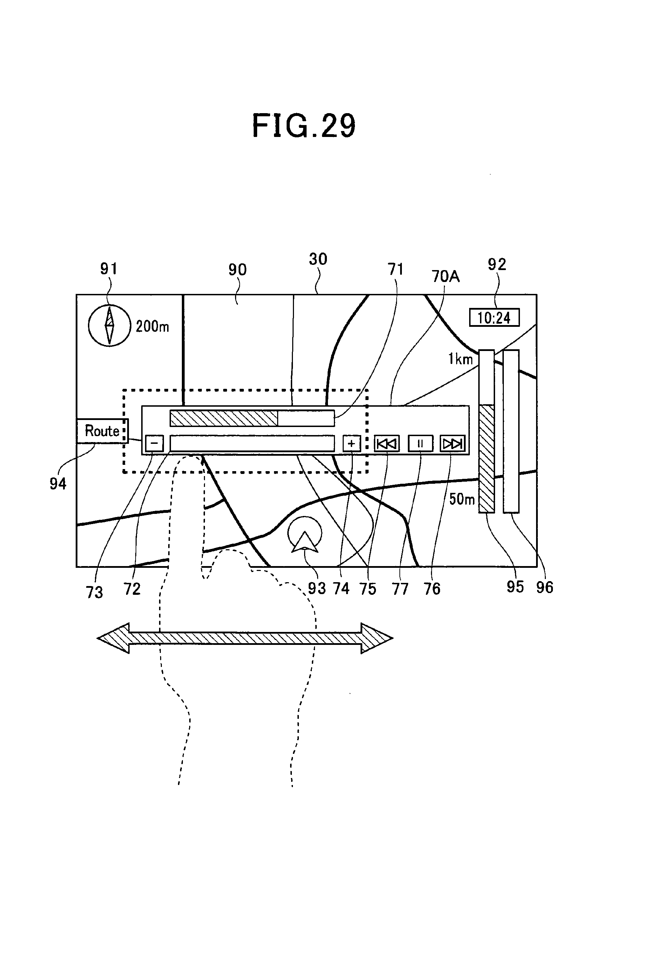

In step S74, CPU 20a refers to a vehicle speed pulse signal supplied through the connection terminal 10a and determines whether the vehicle is running or not. When the vehicle is running (step S74; Yes), CPU 20a goes to step S75. In the other case (step S74; No), CPU 20a goes to step S79. It may be determined not on the basis of the vehicle speed pulse, but on the basis of whether parking brake is applied. In step S75, CPU 20a obtains from HDD 20d information for displaying a map and a first audio operating area, and supplies the information to the drawing processor 20a to display the information on LCD 30. As a result, information shown in Fig. 28 is displayed on LCD 30. In the display example of Fig. 28, the display position of the first audio operating area 70A is changed to a position which is far away from the icon 93 representing the position of the vehicle itself as compared with the display example of Fig. 13. Accordingly, the visibility of information existing around the position of the vehicle itself can be prevented from being lowered. Furthermore, on the screen shown in Fig. 28, the operable range of the volume adjusting area 72 is enlarged to a range represented by a broken line, whereby the driver can simply and surely operate the volume of audio even during driving. That is, during non-running (non-driving), the volume adjusting area 72 is disposed in the neighborhood of the lower side of the display portion of LCD 30 and set so that the volume can be simply adjusted by tracing the lower side concerned with a finger as shown in Fig. 13, etc. However, during running, it is necessary to display the position of the vehicle itself, and thus it is impossible to display at such a position. Therefore, by enlarging the operability range of the volume adjusting area 72, the volume can be adjusted without lowering the operationality. An enlargement target range of the operable range is not limited to a part of the screen shown in Fig. 29, but may be the overall area of the screen. In the example shown in Fig. 28, the operations on the map (the operations such as scroll, etc.) are prohibited, and thus even when an area other than the volume adjusting area 72 is erroneously operated, the map can be prevented from being carelessly scrolled or the like.

In step S76, it is determined whether the first audio operating area 70A is operated or not. When the operation is determined to be executed (step S76; Yes), CPU 20a goes to step 77. In the other case (step S76; No), CPU 20a goes to step S78. In step S77, the reproducing unit 34 is controlled in accordance with the operation content detected in step S76 to control the reproduction of audio. For example, when the volume adjusting area 72 is operated, the volume of audio is adjusted. In step S78, CPU 20a determines whether it should return to the processing of the step S71. When the returning is determined (step S78; Yes), CPU 20a returns to step S71 to repeat the same processing as described above. In the other case (step S78; No), the same processing is repeated. Specifically, for example, when a state that no operation is executed on the first audio operating area 70 is continued for a fixed time, when an operating area other than the first audio operating area 70 is operated or when the hardware button 33a is operated, CPU 20a determines the returning and thus returns to the step S71.

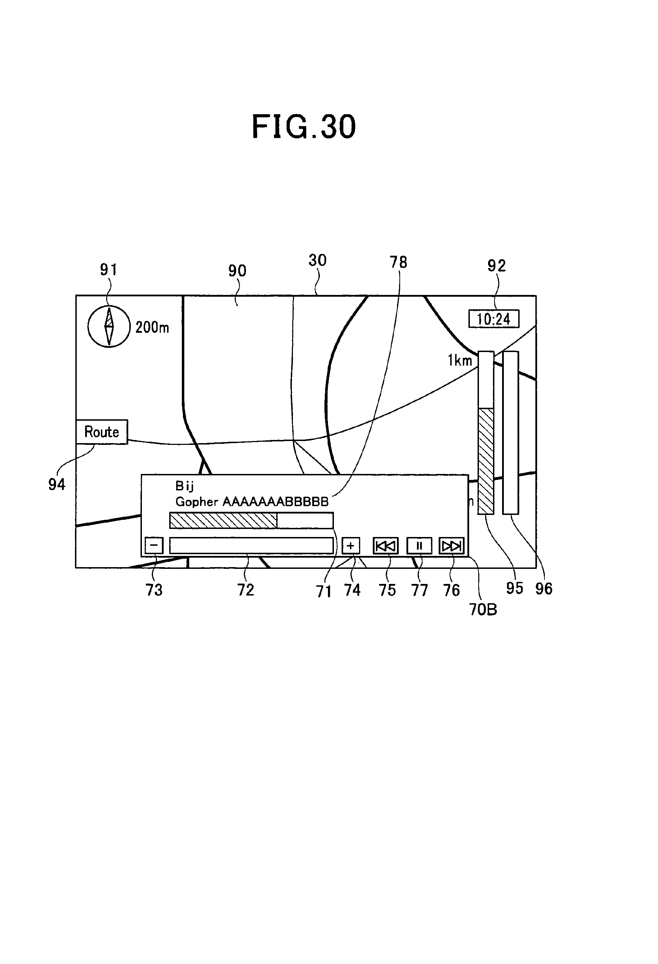

In step S79, CPU 20a obtains information for displaying a map and a second audio operating area from HDD 20d, and supplies the information to the drawing processor 20e to display the information on LCD 30. As a result, information shown in Fig. 30 is displayed on LCD 30. In the display example of Fig. 30, the display position of the second audio operating area 70B is changed to the neighborhood of the lower side of the display portion of LCD 30 as compared with the display example of Fig. 28. Furthermore, the album name "Bij" and the artist name "Gopher" of music data being reproduced and other information are displayed at the uppermost portion within the second audio operating area 70B. With respect to the volume adjusting area 72, it is not set to an enlarged area, but the range thereof is set to substantially the same range as the display range of the volume adjusting area 72 as shown in Fig. 29. As described above, when the information terminal device is not mounted on the cradle 36 or the vehicle is not running, the information concerning the music data being reproduced is displayed within the second audio operating area 7 to let the user know that. Furthermore, when the information terminal device is mounted on the cradle 36 or the vehicle is running, such a display is not performed, and the first audio operating area 70A having a narrow display area is displayed, so that the visibility of the map information can be prevented from being lowered.

In step S80, it is determined whether the second audio operating area 70B is operated or not. When the operation is determined to be executed (step S80; Yes), CPU 20a goes to step S81. In the other case (step S80; No), and CPU 20a goes to step S82. In step S81, the reproducing unit 34 is controlled in accordance with the operation content detected in step S80 to control the reproduction of audio. In step S82, CPU 20a determines whether the hardware button 33a is operated or not. When the operation is determined to be executed (step S82; Yes), CPU 20a goes to step S83. In the other case (step S82; No), the same processing is repeated. In step S83, CPU 20a obtains from HDD 20d information for displaying the screen on the second column from the left side and the third line from the upper side in Fig. 4, and supplies the information to the drawing processor 20a to display the information on LCD 30. As a result, information shown in Fig. 14 is displayed on LCD 30.

In step S84, CPU 20a determines whether the hardware button 33a is operated or not. When the hardware button 33a is determined to be operated (step S84; Yes), CPU 20a returns to step S71 to repeat the same processing as described above. In the other case (step S84; No), the same processing is repeated.

### (C) Description of Modified Embodiment

he above embodiments described above are merely embodiments of the present invention, and it is needless to say that any arbitrary modification and application can be made within the scope of the present invention.

For example, on the screen shown in Fig. 9, when the main menu is rotated under the state that a prescribed menu item is selected on the sub menu 80, the rotation may be stopped so that the menu items corresponding to the menu item selected on the sub menu 80 are located at the head position.

Furthermore, the menu items are displayed as the main menu and the sub menu on the screen shown in Fig. 9, however, information other than the menu item may be displayed and selected.

Furthermore, according to this embodiment, when the hardware button 33a is operated, the audio operating area 70 is displayed. However, the software button for performing the control associated with not only the audio, but also video may be displayed in combination. When the hardware button 33a is once operated, the audio operating area 70 is displayed. However, it may be displayed on the screen at the uppermost stage of Fig. 4, on the screen at the lowermost stage of Fig. 4 or on a screen other than these screens at the uppermost and lower most stages. That is, in the embodiment described above, the audio operating area 70 is displayed on a display screen displayed next (secondly) to the reference screen as a " a predetermined number of order" from the reference screen (the head screen of Fig. 4) described in claims, however, it may be displayed first or thirdly. Furthermore, in the above embodiments, the adjustment target of the audio operating area 70 is audio data. However, sounds output in each operation mode may be set as the adjusting target. Specifically, in the car navigation mode, audio data to be reproduced under navigation is set as an adjustment target. Furthermore, in the Internet mode, audio data downloaded from a web server may be set as an adjustment target.

Furthermore, according to the embodiments, the processing described above is executed in the car navigation mode. However, the same processing may be executed in a pedestrian navigation mode for guiding a route for pedestrians. Specifically, for example, even in a case where the pedestrian navigation mode is selected, the processing of the step S75 and subsequent steps may be executed when movement of a pedestrian is detected. The information processing terminal device 10 may be provided with a swing sensor, and when a swing motion caused by walking of pedestrian is detected by the swing sensor, it may be determined that the pedestrian is under walking.

## Claims

1. An information terminal device, **characterized by** comprising:
a display operation unit that can display and input information;
switching means for switching a plurality of operation modes provided to process different information;
selecting means for successively selecting, in accordance with a user's operation, one display screen out of a reference screen as a display screen displayed at the beginning in each operation mode and one or plural display screens displayed successively in a predetermined order subsequently to the reference screen when the operation mode is switched by the switching means, and displaying the selected display screen on the display operation unit; and
display means for displaying, on the display operation unit, an output state adjusting portion for adjusting an output stage of cognitive information on a display screen which is displayed at a predetermined number of order from the reference screen in each operation mode when a display screen is selected by the selecting means.

2. The information terminal device according to claim 1, wherein the cognitive information is audio information, and when a display screen is selected by the selecting means, the display means displays the output state adjusting portion for adjusting the output state of the audio information on a part of the display operating unit on a display screen which is displayed next to the reference screen in each operation mode.

3. The information terminal device according to claim 1, wherein the cognitive information is image information, and when a display screen is selected by the selecting means, the display means displays on a part of the display operating unit a slider for adjusting scale-enlarged display or scale-reduced display of plural information elements contained in an image information displayed on the display operating unit on a display screen which is displayed next to the reference screen in each operation mode.

4. The information terminal device according to claim 3, wherein the operation mode has an audio reproducing mode for reproducing audio data and a navigation mode for displaying map information to represent a route, the information element is an icon which represents audio data in the audio reproducing mode and a map in the navigation mode, and when the slider is operated, the icon or the map is displayed with being enlarged or reduced.

5. The information terminal device according to claim 1, wherein the switching means switches the plural operation modes in accordance with an operation of a software button displayed on the display operation unit, and the display means successively selects and displays the display screen in accordance with an operation of a hardware button provided to apart of the information terminal device.

6. The information terminal device according to claim 1, wherein the information terminal device can be secured to a vehicle, the operation modes contain a car navigation mode, and the display means displays the output state adjusting portion at a position where the output state adjusting portion is not overlapped with an icon representing the position of the vehicle itself when the car navigation mode is selected by the switching means and the vehicle is running.

7. The information terminal device according to claim 1, wherein the information terminal device can be secured to a vehicle, the operation modes contain a car navigation mode, each of the operation modes has the reference screen, a display screen on which the output state adjusting portion is displayed and a sub menu for selecting a processing content in each operation mode, and the display means excludes from a display target a display screen on which the sub menu is displayed when the car navigation is selected by the switching means and the vehicle is running.

8. The information terminal device according to claim 1, wherein the information terminal device can be secured to a vehicle, the operation modes contain a car navigation mode, and the display means enlarges an operable area of the output state adjusting portion when the car navigation is selected by the switching means and the vehicle is running.

9. The information terminal device according to claim 8 , wherein the display means prohibits scroll operation of a map displayed on the display operation unit when the car navigation is selected by the switching means and the vehicle is running.

10. The information terminal device according to claim 1, wherein the information terminal device can be secured to a vehicle, the operation modes contain a car navigation mode, the output state adjusting portion can adjust a reproduction state of music data, and the display means does not display information concerning music data being reproduced on the output state adjusting portion, but displays the information in the other case.

11. An information processing method for an information terminal deice, **characterized by** comprising:
a switching step for switching a plurality of operation modes provided to process different information;
a selecting step for successively selecting, in accordance with a user's operation, one display screen out of a reference screen as a display screen displayed at the beginning in each operation mode and one or plural display screens displayed successively in a predetermined order subsequently to the reference screen when the operation mode is switched in the switching step, and displaying the selected display screen on a display operation unit that can display and input information; and
a display step for displaying, on the display operation unit, an output state adjusting portion for adjusting an output stage of cognitive information on a display screen which is displayed at a predetermined number of order from the reference screen in each operation mode when a display screen is selected in the selecting step.

12. An information processing program for an information terminal device, **characterized in that** the program makes the information terminal device function:
switching means for switching a plurality of operation modes provided to process different information;
selecting means for successively selecting, in accordance with a user's operation, one display screen out of a reference screen as a display screen displayed at the beginning in each operation mode and one or plural display screens displayed successively in a predetermined order subsequently to the reference screen when the operation mode is switched by the switching means, and displaying the selected display screen on a display operation unit that can display and input information; and
display means for displaying, on the display operation unit, an output state adjusting portion for adjusting an output stage of cognitive information on a display screen which is displayed at a predetermined number of order from the reference screen in each operation mode when a display screen is selected by the selecting means.
